# FASCICULE DE BREVET EUROPEEN

(11) **EP 2 404 406 B1**
(45) Date de publication et mention de la délivrance du brevet: **22.08.2018**
(21) Numéro de dépôt: 10707073.2
(22) Date de dépôt: 08.02.2010
(51) Int. Cl.: H04L 12/24, H04W 4/00, H04W 84/04

(54) **CENTRE RÉSEAU MULTISERVICES GÉNÉRIQUE, DE CRÉATION ET D'ORCHESTRATION D'APPLICATIONS ET DE SERVICES DE RÉSEAUX**
GENERISCHE MEHRFACHDIENSTNETZZENTRALE ZUM ERZEUGEN UND ORCHESTRIEREN VON NETZWERKANWENDUNGEN UND DIENSTEN
GENERIC MULTISERVICE NETWORK CENTRE FOR CREATING AND ORCHESTRATING NETWORK APPLICATIONS AND SERVICES

(30) Priorité: 05.03.2009 FR 0900993
(43) Date de publication de la demande: 11.01.2012
(73) Titulaire: Opencode Systems O.O.D., 1612 Sofia (BG)
(72) Inventeur: STAYKOFF, Constantin, F-75008 Paris (FR)
(86) Numéro de dépôt international: PCT/FR2010/000087
(87) Numéro de publication internationale: WO 2010/100343

(56) Documents cités:
- EP-A2- 1 345 456
- KAVADIAS D. ET AL: "MobileIN: Harmonized services over heterogeneous Mobile, IN and WLAN infrastructures" 14TH IST MOBILE&WIRELESS COMMUNICATIONS SUMMIT, [Online] 19 juin 2005 (2005-06-19) , - 23 juin 2005 (2005-06-23) pages 1-6, XP002549749 Dresden, Germany Extrait de l'Internet: URL:http://www.eurasip.org/Proceedings/Ext /IST05/papers/400.pdf> [extrait le 2009-10-12] -& INTERNET CITATION, 23 juin 2005 (2005-06-23), pages 1-2, XP002549751 Extrait de l'Internet: URL:http://www.eurasip.org/Proceedings/Ext /IST05/papers_M.html> [extrait le 2009-10-12]
- "AlbatrOSS Intermediate Architecture and Specifications" ALBATROSS IST-2001-34780, [Online] 15 juillet 2003 (2003-07-15), pages 1-109, XP002549750 Extrait de l'Internet: URL:http://www.ist-albatross.org/AlbatrOSS _IST34780_D8.pdf> [extrait le 2009-10-12]

## Description

La présente invention concerne un centre réseau multiservices génériques de création et d'orchestration d'applications et de services réseaux.

La présente invention est située dans le domaine des serveurs d'applications réseaux, plus particulièrement dans le domaine de la création, l'intégration, le regroupement, la gestion, le déploiement, l'activation et l'orchestration de services réseaux (mobiles, fixes, IP (« Internet Protocol » en anglais, protocoles Internet), convergents, et nouvelles générations)et de multitude de services réseaux temps réel, comprenant des moyens d'orchestration de services propres et/ou de services extérieurs.

La présente invention est située notamment dans le secteur de la téléphonie mobile, dans un contexte d'expansion de nouvelles fonctionnalités et de services destinés à des utilisateurs, de gestion de flux d'appels et de flux d'informations complexes, notamment des sessions réseaux de types hétérogènes, traitant simultanément les appels de signalisation réseau et les appels voix et/ou données et/ou multimédias. Le contexte de la présente invention est la prise en charge de traitements d'événements simultanément à des tâches déjà en cours de traitement.

Ce contexte est issu du comportement de l'utilisateur qui sollicite des applications et des services de plus en plus nombreux et divers.

En général, dans la présente invention, est entendu sous le terme « utilisateur » une personne physique abonnée, fixe, nomade ou « Roamer » (abonné itinérant inter-réseaux, du mot en anglais « Roaming », itinérance inter-réseaux de télécommunications) à au moins un réseau de télécommunications, ou bien une tierce partie, par exemple un fournisseur d'applications, de services, de contenus ou d'un équipement quelconque, par exemple d'un dispositif d'alarme ou de signalisation.

L'équipement de l'utilisateur, ledit terminal, est par exemple un téléphone mobile (dit encore téléphone portable), un PDAs, («Personal Digital Assistant » en anglais, ordinateur de poche, cumulant de nombreuses fonctions), un ordinateur multifonctions de bureau ou de bord ou de véhicule, une plateforme multifonctions domestique ou d'entreprise, comprenant par exemple une fonction de surveillance ou de sécurité, ou tout autre dispositif fixe ou mobile pouvant communiquer avec au moins un réseau.

Actuellement, les opérateurs de télécommunications, lesdits « opérateurs » complètent et diversifient les services réseaux proposés avec par exemple, des services de type VAS mobile (« mobile Value-Added Services » en anglais, services mobiles à valeur ajoutée), réalisées sur des plates-formes dédiées, par exemple de type IN (« Intelligent Network » en anglais, réseau intelligent, concept définissant des fonctions pilotant des équipements du réseau téléphonique).

Toutes ces fonctionnalités sollicitées mènent à l'encombrement du réseau et des plates-formes VAS. Cet encombrement se traduit d'un coté par l'augmentation du nombre de plates-formes VAS, à la périphérie du coeur de réseau, qui mène à de multiples difficultés de hiérarchisation et d'orchestration des services temps réel fournis aux utilisateurs. D'un autre côté, l'ajout de modules supplémentaires à l'intérieur d'une même plate-forme VAS la rend extrêmement complexe, peu flexible et propage cette même rigidité à travers tout le réseau.

Ce problème technique est indépendant de l'architecture réseau (architecture conventionnelle ou bien NGN (« Next Generation Network » en anglais, réseau de génération future)) et concerne notamment des fonctionnalités comme :
- La gestion de contrôle d'appel pendant les sessions multiservices dans tous les modes de fonctionnement (prépayé, abonnement ou mixte) et dans tous les modes (local, itinérance inter réseaux ou nomade) ;
- La disponibilité des services pour interagir et orchestrer divers autres services, telles que des services prépayé, VPN « Virtual Private Network » en anglais, réseau privé virtuel), le filtrage d'appels entrants et sortants (« call screening » en anglais), les sonneries de retour (« Ring back tones » en anglais), et de multiples autres services réseaux temps réel;
- Le support simultané de nombreux autres services (comme par exemple des services Internet), complémentaires aux services de gestion des appels et à la gestion des services suite aux différentes requêtes des utilisateurs, des groupes ou de communautés d'utilisateurs, ou bien suite à divers événements ;
- La capacité de répondre aux problèmes de l'interaction avec les différentes applications, c'est-à-dire de gérer la convergence des applications et des services, par exemple concernant la convergence des services basés sur IP (« Internet Protocol » en anglais, protocole Internet) ou la convergence des systèmes IT (« Information Technologies » en anglais, technologies de l'information) ;
- La capacité de fournir un SCE (« Service Création Environment » en anglais, environnement de création de services), pour la création, la gestion et l'orchestration de services ;
- La capacité de fournir un écosystème pour la chaîne complète de valeurs, incluant tous les acteurs comme les opérateurs de télécommunications, les fournisseurs de services mobiles et de services convergents, les fournisseurs d'équipements, les fournisseurs de modules IT, les fournisseurs de solutions OSS (« Operational Support Business » en anglais, système opérationnel de support) et de solution BSS (« Business Support Systems» en anglais, centre de services de transaction et d'affaires), les intégrateurs de systèmes, les industries associées, et autres ;
- La capacité d'être générique et de préconiser les futures générations de coeurs de réseaux de télécommunication, et autres.

Les marchés actuels des télécommunications mobiles sont de plus en plus compétitifs et segmentés. Pour répondre aux besoins, les opérateurs de télécommunications proposent un ensemble d'offres commerciales, regroupant un sous-ensemble de services, comme par exemple un forfait pour trois heures d'appel voix vers les mobiles, usage illimité de SMS (« Short Message Service » en anglais, court message textuel pouvant être émis et reçus depuis un téléphone portable) en heures creuses, trente MMS (« Multimedia Message Service » en anglais, service de message multimédia), une réduction de vingt pourcent sur l'itinérance mobile à l'étranger, plus un numéro de ligne fixe virtuelle (conventionnelle ou VoIP « Voice over IP » en anglais, voix sur protocole Internet)), attaché à cette même souscription mobile.

Néanmoins, pour gérer un ensemble d'offres complexes, il est indispensable d'élaborer une gestion particulière de chaque flux d'appels (entrant et sortant), ainsi que l'interférence et la hiérarchisation de ces flux. Pour les moyens techniques actuels, cela produit un environnement très lourd en termes de mise en oeuvre et de coûts d'implémentation et de gestion. Les services requis pour une même offre sont souvent procurés par de différents fournisseurs. Cela se traduit d'un côté, en des implémentations et des intégrations complexes et donc onéreuses et d'un autre côté, en une interopérabilité fortement réduite entre les services.

De plus, une contrainte majeure et supplémentaire survient du fait que certains des ces services nécessitent une gestion et une exécution en temps réel.

Ainsi, la gestion de services existants et l'adjonction de nouveaux services s'avèrent compliquées et souvent non faisables.

Dans ce contexte, les offres commerciales rencontrent des difficultés majeures techniques et de temps de mise en oeuvre pour être actualisées et personnalisées.

Ainsi pour satisfaire les contraintes énoncées, une meilleure flexibilité du coeur de réseau de télécommunications s'avère indispensable.

Le problème technique est donc de concevoir un système non intrusif qui se rajoute dans l'architecture existante ou nouvelle du coeur de réseau de télécommunications d'une part, et qui est ouvert et flexible à l'introduction, la création et l'orchestration de services quelconques (existant ou nouveaux) d'autre part, tout en étant conforme aux standards et transparent pour les systèmes déjà implémentés, et cela avec de faibles coûts et des temps réduits d'intégration, d'implémentation, de déploiement et de maintenance.

Afin de répondre à cette problématique, l'art antérieur connaît différentes approches, qui cependant n'abordent que, soit des aspects restreints et ponctuels de cette problématique, soit des plateformes de services difficiles d'intégration dans les réseaux de télécommunications.

Un document connu par l'art antérieur est le document US 7,418,089 relatif à un service de' télécommunications pour le contrôle et la gestion d'appel téléphonique, en stockant dans un Point de Contrôle de Services (PCS) des numéros de téléphone restrictifs et des numéros de téléphone prioritaires. Lorsque des données d'appel entre le numéro de téléphone du souscripteur et un numéro de téléphone externe sont reçues, le PCS détermine si le numéro de téléphone externe est dans la liste des numéros restrictifs ou prioritaires. Lorsque le numéro de téléphone externe correspond à la liste restrictive, l'appel est arrêté et les données de l'appel sont stockées. Lorsque le numéro de téléphone externe correspond à la liste prioritaire ou ne figure pas dans la liste restrictive, l'appel est communiqué. Le PCS transmet des données de l'appel enregistrées à un système de gestion, qui est accessible par le souscripteur via Internet et une réponse vocale interactive est mise en place pour la génération d'un rapport. Le service comporte également des moyens de modifications des restrictions et des priorités.

Cependant, ce document est centré avant tout sur la gestion des identifications, des acceptations et des refus d'appel, à l'aide de procédés spécifiques. Ce document ne résout pas le problème de gestion de services cohabitants.

L'art antérieur connait aussi le document US 7,184,534 qui concerne un procédé reliant des fonctions de contrôle d'appel d'un serveur téléphonique avec des fonctionnalités de traitement vocal en utilisant un programme commun de serveur comprenant la réception d'un appel dans le serveur vocal, le serveur vocal élaborant des paramètres relatifs à l'appel, un transfert des paramètres à un autre serveur comportant un module de programmes exécutées en fonction desdits paramètres d'appel. Le programme d'exécution des paramètres génère un script. Ce script est transféré à partir de cet autre serveur vers le serveur vocal et est exécuté au sein du serveur vocal, afin de gérer l'appel. L'appel est ensuite transféré à partir du serveur vocal vers un serveur téléphonique, dans le cas où le serveur vocal identifie lors de l'exécution du script toutes les fonctions de contrôle d'appel contenues dans le script. Le serveur téléphonique exécute des fonctions de contrôle d'appel en fonctions des identifiants du script. Un interpréteur de scripts vocaux de type VXML («Voice eXtended Markup Language » en anglais, langage vocal de marquage étendu, qui désigne une interface de programmation d'applications relative à la communication utilisant des périphériques liés à la synthèse vocale et la téléphonie) ou de type CCXML (« Call Control extensible Markup Language » en anglais, langage de marquage étendu relatif à la fonction de contrôle d'appel mobile) est présent dans le serveur vocal, afin de traiter les instructions des fonctions.

Néanmoins, ce document traite des applications de téléphonie à l'aide de serveurs vocaux, destinées à des applications restreintes, comme par exemple des réseaux téléphoniques d'entreprises et ne traite pas les spécificités des services des réseaux de télécommunications mobiles (par exemples des services de signalisation propres aux réseaux mobiles ou bien la coordination entre ces même services).

Un document également connu par l'art antérieur est le document WO2007050158, qui concerne des systèmes et des procédés permettant de coordonner des services du WEB (abréviation de WWW « Word Wide WEB » en anglais, toile réseau mondiale, encore dite « Internet ») et de téléphonie. Un procédé consiste à définir un élément XML (« XML » en anglais, eXtended Markup Language, langage de marquage étendu de description et d'analyse de données) de commande d'appel CCXML associé à l'accès à une application de service WEB. Ledit procédé consiste à extraire une identification de session à partir d'une action CCXML dans une session téléphonique. L'identification de session est utilisée pour stocker et extraire un contexte de session dans un référentiel de contextes. Une application de services du WEB est activée à l'aide de l'identification de session, afin de coordonner des événements et un contexte entre la session téléphonique et l'application de services WEB. Ledit procédé inclut un mécanisme de gestion, disponible en CCXML pour la session téléphonique, afin de contrôler le multiplexage temporel et le protocole d'initiation d'une session pour les tâches de réponse à un appel, de transfert d'appel, de déclenchement d'un appel, de pont d'appel ou d'arrêt d'un appel.

Cependant, ce document aborde uniquement les aspects de coordination entre des appels téléphoniques et des services WEB, en se limitant à des appels voix. Ce document ne résout pas la problématique de gestion, de coordination et de hiérarchisation des services coeur de réseaux mobiles (services de signalisation, voix, données, multimédia et autres).

L'art antérieur connait également le document KAVADIAS D. ET AL, « MobileIN : Harmonized services over heterogeneous Mobile, IN and WLAN infrastructures », 14TH IST MOBILE&WIRELESS COMMUNICATIONS SUMMIT, 19 juin 2005 (2005-06-19), 23 juin 2005 (2005-06-23), pages 1-6, XP002549749, Dresde, Allemagne. Ce document est relatif à une architecture avec des propriétés dites de scalabilité, pour la fourniture de services unifiés à valeur ajoutée pour des téléphones mobiles, des téléphones fixes, des WLAN (« Wide Local Area Network » en langue anglaise, réseau local étendu) et des clients IP. Le concept de ce document est basé sur une nouvelle architecture optimisée de coeur du réseau de type IN, permettant l'implémentation de services génériques à l'aide d'étapes de traitement pour relayer le coeur de réseau commuté pour l'exécution des services, pour découpler les applications IN des services de télécommunications, pour solutionner les interactions inter-réseaux des services IN en dehors du réseau de télécommunications et pour intégrer de manière flexible des nouveaux éléments en proposant des modifications des protocoles standardisés IN et CAMEL. L'architecture du système comprend un environnement de création et d'exécution de services (Service Création and Execution Framework (SCEF), en langue anglaise) et une passerelle d'accès ouvert (Open Access Gateway (OAG), en langue anglaise) qui représente une interface avec les composants coeur de réseau IN. Ledit SCEF comprend des serveurs d'applications qui communiquent avec un serveur de communication dont le rôle est de découpler les applications et la communication avec les éléments coeur de réseau IN.

Néanmoins, ce document d'aborde pas la problématique relative au regroupement et à l'orchestration de services provenant de plateformes de services diverses, avec différentes logiques d'orchestration ou de services en fonction d'une variété de combinaison entre les services, et ne propose donc pas de solution à cette problématique, notamment à l'aide d'un système d'applications et de services, situé au sein d'un coeur de réseau de télécommunications mobiles et relié à un ensemble d'éléments dudit coeur de réseau de télécommunications mobiles.

La présente invention résout le problème technique énoncé à l'aide d'un système générique et multiservices destiné à un coeur de réseau de télécommunications, permettant l'intégration, la création, le déploiement et l'orchestration de services (existants ou nouveaux) de nature hétérogène à l'aide d'une architecture ouverte, flexible, non intrusive et opérant en temps réel.

Le système de la présente invention gère des services et des flux de réseaux de télécommunications, de réseaux de nouvelle génération, de réseaux Internet (ou encore dit « WEB ») ou d'autres réseaux. De plus, ce système assure également différentes logiques d'orchestration ou de services en fonction d'une variété de combinaisons entre les services.

La solution supporte au moins un type quelconque de réseau avec ses protocoles standards ou propriétaires. Tous les messages supportés par les protocoles sont interprétés et traités par ledit système en temps réel, qu'ils soient standards ou propriétaires.

Le système, objet de la présente invention, offre à l'opérateur la possibilité de préparer son réseau, de manière à ce que les services (y compris ceux de fournisseurs externes) s'intègrent directement dans le coeur de réseau, et de bénéficier ainsi d'une multitude de services réseau déjà en place, comme par exemple la tarification et/ou de changement de la tarification et la facturation temps réel ou différée. Aussi, cette accessibilité du coeur de réseau est offerte pour l'intégration et l'orchestration de services WEB dits « sauvages » ou isolés, tels que par exemple des services d'information, de messageries Internet ou autres. L'opérateur de télécommunications effectue de cette manière un regroupement de services et ouvre le coeur du réseau de télécommunications à des tiers services.

L'architecture générique ainsi conçue représente un environnement de création, d'intégration, de déploiement et d'orchestration de services avec des propriétés de « scalabilité » (terme relatif au mot « scalability » en anglais, qui désigne la propriété de redimensionnement d'un système ou d'un procédé en terme respectivement de composants ou d'étapes, de qualité, de taille, de résolution, de bande passante ou autres). La scalabilité est par exemple traduite par la capacité de traitement de l'information en termes de données, d'applications, de services et de réseaux.

Dans son acception la plus générale, la présente invention concerne un système numérique de télécommunications pour la création, l'intégration, la gestion, le déploiement, l'activation, le regroupement et l'orchestration de services provenant de plateformes de services diverses, avec différentes logiques d'orchestration ou de services en fonction d'une variété de combinaison entre les services, caractérisé en ce qu'il est un système d'applications et de services, dit CENTRE RESEAU MULTISERVICES, situé au sein d'au moins un coeur de réseau de télécommunications mobiles. Ledit CENTRE RESEAU MULTISERVICES comprend:
- au moins un module serveur d'applications et d'orchestration de services, dit Network Browser, comprenant au moins un module serveur de contrôle et d'orchestration d'appels, dit module CCB et au moins un module serveur de logique d'orchestration et d'intégration de services, dit module LIB, lesdits services :
   o étant des services réseaux mobiles, fixes, IP, convergents, nouvelles générations et/ou des services coeur de réseau de télécommunications mobiles ;
   o étant compatibles avec au moins un protocole standard ;
- au moins un module passerelle de réseau, communiquant avec ledit Network Browser et reliant ledit Network Browser à au moins un ensemble d'éléments dudit coeur de réseau de télécommunications mobiles;
- au moins un module passerelle d'intégration, communiquant avec ledit Network Browser et reliant ledit Network Browser à travers au moins un réseau de type IP avec au moins un module de services d'opérateurs de télécommunications ou de tierces parties et/ou à au moins un module de services mobiles à valeur ajoutée;
- au moins un module base de données et de profilage, communiquant avec ledit Network Browser, et comprenant au moins une fonctionnalité de définition d'au moins un profil de logique de services, la logique de services étant des règles de combinaisons et d'enchaînements de services; et
- au moins un module d'administration, communiquant avec ledit Network Browser , avec ledit module passerelle de réseaux, avec ledit module passerelle d'intégration et avec ledit module base de données et de profilage, et comprenant des fonctionnalités de contrôle système dudit CENTRE RESEAU MULTISERVICES et de configuration desdits modules base de données et de profilage, passerelle de réseau et passerelle d'intégrations, le module d'administration comprenant aussi une logique de regroupement et d'orchestration de services et un environnement de création de services.
Ledit CENTRE RESEAU MULTISERVICES est:
- un système connecté à au moins une plateforme de services de type SMSC, passerelle WAP, passerelle OTA, module IVR et/ou un module de type GPRS ;
- un système de tarification et de facturation de services en temps réel, comprenant au moins un module de tarification, et/ou au moins un module de facturation, et/ou au moins un module d'observation et de classement, lesdits modules étant reliés au Network Browser;
- un système où le Network Browser contient des fonctions de déclenchements multiples d'actions par type d'appel, lesdits déclenchements étant définis dans la base de données et de profilage et utilisés par le Network Browser pour exécuter et pour contrôler les différents services relatifs à un type d'appel ;
- un système de type Proxy effectuant une signalisation pour une partie ou un ensemble de messages du réseau de télécommunications mobiles.

De préférence, lesdits modules CCB et LIB sont basés sur au moins un protocole de communications et sur au moins un interpréteur de langages structurés par objets, relatif à des descripteurs structurés par objets.

Avantageusement, ledit module CCB est basé sur au moins un interpréteur de langage de type CCXML.

Avantageusement, ledit interpréteur de langage de type CCXML est étendu à l'aide de protocoles de communications supplémentaires tels que SCCP, TCAP, MAP, INAP, CAMEL, DIAMETER, H.323, MGCP, CORBA ou autres protocoles de télécommunications ou de traitement de l'information.

De préférence, ledit module LIB est basé sur au moins un interpréteur de langage de type VXML.

De plus, ledit interpréteur de langage de type VXML est étendu à l'aide de protocoles de communications supplémentaires, lesdits protocoles de communications supplémentaires n'étant pas liés uniquement aux appels voix traditionnels.

Dans une mise en oeuvre particulière, ledit module LIB et ledit module CCB sont confondus en un seul module

Dans une autre mise en oeuvre particulière, au moins un module d'administration ou au moins un module passerelle d'intégration ou au moins un module LIB ou au moins un module CCB ou au moins un module passerelle de réseau ou au moins un module Network Browser ou au moins un module base de données et de profilage est autosuffisant.

Avantageusement, ledit environnement de création de services est accessible localement, à distance ou depuis un terminal, par un opérateur et/ou par des tierces parties et/ou des abonnés eux-mêmes.

Dans une variante, lesdits services sont interactifs ou non interactifs et multilingues pour toute la chaîne de bout en bout.

Dans une autre variante, ladite logique de regroupement et d'orchestration de services est indépendante des langues des services pour toute la chaîne de bout en bout.

Dans un mode de réalisation préféré, ladite base de données et de profilage comprend au moins une fonctionnalité de définition d'au moins un profil d'utilisateur et au moins une fonctionnalité de définition d'au moins un profil de service.

Avantageusement, ledit système comprend des fonctionnalités de:
- Contrôles d'appels et de services ;
- Orchestrations d'appels et de services ;
- Déclenchements multiples et illimités ;
- Sessions parallèles de gestion d'appels et de services ;
- Machines d'états d'appels et de services ;
- Gestions de différentes sources d'événements ;
- Interprétations et exécution de services et de logique de services ;
- Utilisations de temporisateurs multiples ;
- Gestions des services en local et/ou à distance et/ou en provenance de parties tierces ;
- Profilages des utilisateurs et des services.
- Introductions et/ou gestions dans ledit coeur de réseau et dans au moins un élément dudit coeur de réseau, des services à contrôle complexe;
- Ouvertures dudit coeur de réseau et d'au moins un élément dudit coeur de réseau à au moins un service, ledit au moins un service étant un service propre, un service d'opérateur, un service de tierces parties, un service de l'Internet ou tout autre service;
- Ouvertures dudit coeur de réseau et d'au moins un élément dudit coeur de réseau à au moins un autre réseau numérique.

Dans un premier mode de réalisation, ledit système est un système d'hébergement d'applications et de services de tierces parties.

Dans un deuxième mode de réalisation, ledit système a la capacité de se substituer à au moins un coeur de réseau de télécommunications mobiles.

Dans un troisième mode de réalisation, ledit système est un système de diffusion de type Broadcast.

La présente invention est également relative à un procédé de traitement mis en oeuvre dans ledit système, comprenant au moins :
- une étape de création d'au moins un service dans un environnement de création de services d'un module d'administration compris dans ledit CENTRE RESEAU MULTISERVICES;
- une étape de création d'au moins une logique de services dans ledit module d'administration en faisant les règles de combinaisons et d'enchaînements de services;
- une étape d'intégration et d'interprétation d'au moins un service et/ou d'au moins une logique de services dans ledit Network Browser, compris dans ledit CENTRE RESEAU MULTISERVICES et communiquant avec ledit module d'administration en:
   interprétant et exécutant lesdits services dans un module serveur de contrôle et d'orchestration d'appels, dit module CCB compris dans ledit Network Browser, ledit module CCB étant basé sur au moins un protocole de télécommunications et sur au moins un interpréteur de langage structuré par objets de type CCXML, ledit interpréteur de langage de type CCXML étant étendu à l'aide de protocoles de télécommunications;
   interprétant et exécutant lesdits services dans un module serveur de logique d'orchestration et d'intégration de services, dit module LIB , compris dans ledit Network Browser , ledit module LIB étant basé sur au moins un protocole de télécommunications et sur au moins un interpréteur de langage structuré par objets de type VXML, ledit interpréteur de langage de type VXML étant étendu à l'aide de protocoles de télécommunications;
   échangeant d'objets d'information et/ou d'instruction et/ou de protocoles entre ledit module CCB et ledit module LIB;
- Une étape d'interprétation par ledit Network Browser d'au moins un protocole de télécommunications compris dans une passerelle d'intégration et d'au moins un protocole de télécommunications compris dans une passerelle de réseaux, lesdites passerelle d'intégration et passerelle de réseaux communiquant avec ledit Network Browser et étant comprises dans ledit CENTRE RESEAU MULTISERVICES;
- Une étape de communication entre ledit Network Browser et ladite passerelle de réseaux à l'aide de protocoles contenant des représentations objets de protocoles standards de coeur de réseau de télécommunications mobiles de type SS7, MAP, CAP ou INAP et de traitement des desdits objets dans ledit Network Browser;
- Une étape de communication entre ladite passerelle de réseaux et ledit ensemble d'éléments de coeur de réseau de télécommunications mobiles par au moins un protocole coeur de réseau;
- une étape de déploiement et d'activation desdits services dans le Network Browser;
- une étape d'exécution par ledit CENTRE RESEAU MULTISERVICES desdits services en effectuant l'approvisionnement, la consultation, l'interaction et/ou la modification des informations gérées dans un ensemble d'éléments de coeur de réseau et en effectuant un transfert d'informations supplémentaires à travers les différents éléments dudit coeur de réseau.

Avantageusement, ledit procédé comprend au moins une étape de gestion de sessions multiservices.

De plus, ledit procédé comprend au moins une étape d'activation d'au moins un nouveau service, pendant l'exécution d'au moins un service déjà actif.

Dans une variante, ledit procédé est effectué en mode de fonctionnement de type événementiel.

Dans une autre variante, ledit procédé est effectué en mode de fonctionnement de type client-serveur.

Aussi, ledit procédé est effectué en mode de fonctionnement de type point à point.

Dans un premier mode de réalisation, ledit procédé comporte une étape supplémentaire de tarification et/ou de changement de la tarification en temps réel ou différé.

Dans un deuxième mode de réalisation, ledit procédé comporte une étape supplémentaire de facturation en temps réel ou différé.

Dans un troisième mode de réalisation, ledit procédé comporte une étape de gestion temps réel ou différé des modes de tarifications et de facturations pour tout type d'utilisateur en mode abonné, en mode prépayé, en mode convergent, en mode bouquet de services, en mode tierce partie, d'au moins un réseau de télécommunication.

Dans un quatrième mode de réalisation, ledit procédé comporte une étape supplémentaire d'observation et de classement de l'usage et du comportement des utilisateurs en temps réel ou différé.

Dans un mode de réalisation particulier, la tarification, la facturation et le classement sont effectués par le CENTRE RESEAU MULTISERVICES et/ou par des plateformes externes spécialisées.

Avantageusement, ledit procédé comprend au moins une étape de modifications statiques ou/et dynamiques des paramètres commutés.

De préférence, ledit procédé comprend au moins une étape de regroupement de messages de protocoles réseaux en un seul message destiné à au moins un élément particulier du réseau.

Dans une variante, ledit procédé comprend une étape de signalisation de type Proxy, dans laquelle la passerelle de réseau agit en tant que Proxy pour une partie ou pour l'ensemble des messages du réseau de télécommunications.

Dans une autre variante, ledit procédé comprend une étape de signalisation collaborative de type triangulaire.

Dans un mode de mise en oeuvre, ledit procédé comprend au moins une étape de conversion entre deux quelconques ou plusieurs quelconques protocoles différents.

Dans un autre mode de mise en oeuvre, ledit procédé comprend au moins une étape de modification des paramètres d'au moins un message.

Dans un mode de mise en oeuvre particulier, ledit procédé comprend au moins une étape de combinaison d'au moins un service avec au moins un profil et de support des paramètres de gestion d'états et du temps.

Avantageusement, ledit procédé est effectué en temps réel ou en temps différé.

Les principaux avantages du système générique objet de la présente invention se résument en :
- Sa capacité à s'intégrer d'une manière non-intrusive dans un coeur de réseau de télécommunications ;
- Sa capacité d'introduire et/ou de gérer dans le coeur de réseau et dans les éléments du coeur de réseau des services à contrôle complexe, spécifiques aux besoins de l'opérateur et dans le but du regroupement et du lancement de nouvelles offres de services réseaux;
- Sa capacité d'ouvrir le coeur de réseau de télécommunications et des éléments coeur de réseau à des services propres ou déployés à l'extérieur du système (des services de l'opérateur, de tierces parties, de services WEB ou autres) ;
- Sa capacité d'intégrer des services supplémentaires, de manière non-intrusive pour le coeur de réseau de télécommunications ;
- Sa capacité d'ouvrir le coeur de réseau de télécommunications et des éléments coeur de réseau à d'autres réseaux numériques ;
- Sa capacité d'offrir au moins une multitude de services ;
- Sa capacité de créer de nouveau services ;
- Sa capacité de regrouper et d'orchestrer au moins une multitude de services ou de fonctionnalités de services en provenance de plateformes diverses;
- Sa capacité d'offrir une multitude de services existant et/ou nouveaux, simultanément ou pas et en temps réel ou différé;
- Sa capacité de supporter différents modes de fonctionnement, de type événementiel, client-serveur, point-à-point ou autres ;
- Sa capacité de gérer de sessions multiservices simultanées pour l'utilisateur lui même, pour un groupe d'utilisateurs et pour l'ensemble des utilisateurs, par exemple des sessions de contrôle d'appel, des sessions de messagerie, des sessions de payement, des sessions de navigation, des sessions de type WEB, et autres ;
- Sa capacité d'offrir la gestion temps réel ou différé des modes de tarifications et de facturations pour tout type d'utilisateur (mode abonné, mode prépayé, mode convergent, mode bouquet de services, mode tierce partie) d'au moins un réseau de télécommunication.
- Sa capacité de définir au moins une logique de services ;
- Sa capacité d'orchestrer des services existants et/ou nouveaux;
- Sa capacité d'augmenter les fonctionnalités du réseau de l'opérateur de télécommunications ;
- Sa capacité d'offrir de nouveaux outils d'implémentation, de création, d'intégration, de déploiements et de maintenance des services coeur de réseaux, permettant la diminution considérable des coûts et des ressources.

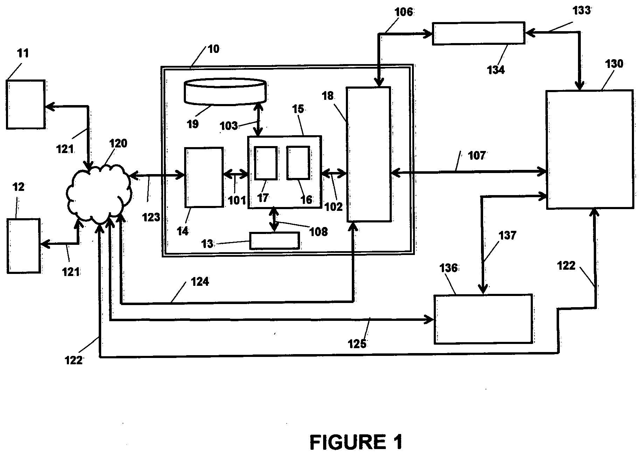

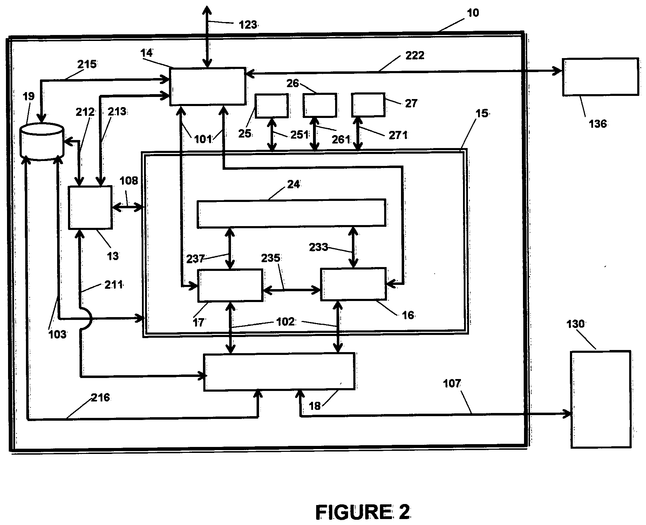

La présente invention sera mieux comprise à l'aide des figures en référence aux dessins annexés qui représentent respectivement :
- en figure 1, un schéma général d'architecture du système, relatif à la présente invention ;
- en figure 2, un mode préféré de réalisation dudit système.

Le schéma général de la présente invention est illustré sur la figure 1. Une plateforme d'applications et d'orchestration de services (10), appelée dans la présente invention « CENTRE RESEAU MULTISERVICES» (10), est conçue pour offrir une multitude de services, par exemple les services suivants :
- les services RB (« Reverse Billing » en anglais, ou facturation inversée, qui a pour but de changer la facturation, par exemple de facturer le compte de l'appelé, et non pas celui de l'appelant, et cela en mode local ou en mode itinérance inter réseaux). Par exemple le service MCC (« Mobile Collect Call » en anglais, rassemblements d'appels mobiles), est une solution de configuration d'appel de type RB) ;
- le service CS (« Call Screening » en anglais, outil de gestion et de filtrage d'appels entrants ou sortants (par rapport au réseau et/ou les utilisateurs), assurant l'acceptation ou le refus de l'appel, la mise en attente ou la redirection pour un délai déterminé des appels vers un autre service, tel que la messagerie vocale ou textuelle. Ce service comprend un processus d'évaluation en temps réel du contexte de la session usagé en cours avant la conversation téléphonique) ;
- les différents services de facturation en temps réel, par exemple la facturation prépayée d'un service de type Roaming (itinérance inter réseaux en anglais) MO-SMS (« Mobile Originated Short Message Service » en anglais, désignant un SMS initié par un terminal mobile itinérant) ;
- la gestion de UCB (« USSD CallBack » en anglais, retour d'appel basé sur le protocole USSD (« Unstructured Supplementary Service Data », en anglais, service de données supplémentaire et non structuré);

Le CENTRE RESEAU MULTISERVICES (10) est donc un système générique multi-applications et multiservices ouvert, qui fournit des services compatibles avec des protocoles standards, utilisés dans la téléphonie mobile, tels que par exemple les protocoles SS7 (« Signaling System 7 » en anglais, protocole de télécommunications pour les connexions haut débit en mode circuit) et/ou les protocoles IP (« Internet Protocol » en anglais, protocole Internet), ou autres.

Dans la présente invention, sous le terme « système générique » est entendu un système basé sur des protocoles et des interpréteurs standards, existants ou nouveaux, permettant la mise en place de fonctionnalités et regroupant ces fonctionnalités, correspondant par exemple à celles d'un système SSP (« Service Switching Point » en anglais point de commutation de services), d'un système SCP (« Service Control Point » en anglais service de control d'appel, d'un système SDP (« Service Data Point » en anglais service de données) et/ou d'un système SCE (« Service Création Environment » en anglais, environnement de création de services), l'ensemble permettant la création, la gestion, le déploiement et l'orchestration d'applications et de services existants ou nouveaux.

Ledit CENTRE RESEAU MULTISERVICES (10) est situé au sein d'un coeur de réseau de télécommunications, par exemple coeur de réseau SS7, de réseau 3G/3G+, de réseau NGN (« Next Generation Networks » en anglais, nom générique d'un quelconque réseau de télécommunications futur), de réseau informatique Internet ou de tout autre réseau numérique.

Le CENTRE RESEAU MULTISERVICES (10) est constitué de cinq modules principaux : au moins une passerelle de réseau (18) basée sur au moins un protocole compatible avec les réseaux de télécommunications, une passerelle d'intégration (14), dédiée à des systèmes et/ou des réseaux de technologie de l'information, un module d'administration (13), une base de données et de profilage (19) et un serveur d'applications et d'orchestration de services (15), appelé « Network Browser » (15) (de « Network Browser » en anglais, serveur de navigation réseau(x)). Ledit Network Browser (15) comporte par exemple un module CCB (17) (« Call Control Browser » en anglais, serveur de contrôle et d'orchestration d'appels flexible) et un module LIB (16) (« Logic and Intégration Browser » en anglais, serveur de logique d'orchestration et d'intégration de services).

Dans un cas général, ledit CENTRE RESEAU (10) est constitué d'au moins un Network Browser (15) comportant au moins un module CCB (17) serveur de contrôle et d'orchestration d'appels flexible et au moins un module LIB (16) serveur de logique d'orchestration et d'intégration de services, au moins un module (18) passerelle de réseaux, au moins un module (14) passerelle d'intégration, au moins un module (13) d'administration et au moins un module (19) base de données et de profilage.

Dans un premier cas particulier, ledit CENTRE RESEAU MULTISERVICES (10) comporte un sous ensemble des modules Network Browser (15), module CCB (17), module LIB (16), passerelle de réseau (18), passerelle d'intégration (14), module d'administration (13) ou base de données et de profilage (19).

Dans un deuxième cas particulier, au moins un module Network Browser (15) ou au moins un module CCB (17) ou au moins un module LIB (16) ou au moins un module passerelle de réseau (18) ou au moins un module passerelle d'intégration (14) ou au moins un module d'administration (13) ou au moins un module base de données et de profilage (19) est autosuffisant.

Dans un troisième cas particulier, le module CCB (17) et confondu avec le module LIB (16). Dans la présente invention est entendu qu'une passerelle de réseau représente une plateforme ou un ensemble de plateformes intermédiaires qui traite et qui transmet des paquets de signalisation et d'informations sur un réseau ou sur plusieurs réseaux vers au moins une destination indiquée, et qui permet de faire communiquer des éléments de réseaux hétérogènes. Sous le terme « passerelle » est comprise donc une passerelle de réseau, pour un réseau quelconque, comprenant au moins une interface de réseau.

La passerelle d'intégration (14) communique avec ledit Network Browser (15), via un lien (101) et à l'aide d'au moins un protocole d'interfaçage, par exemple un protocole standard IP. Sous protocole standard IP est compris l'ensemble des protocoles IP utilisés dans les réseaux. Le Network Browser (15) communique avec la passerelle de réseau (18) via un lien (102), à l'aide de protocoles de type IP par exemple. Ce Network Browser (15) intègre au moins une interface de connexion apte à dialoguer avec au moins une passerelle de réseau (18), et par conséquent, apte à interpréter tout type de protocoles intégrés dans ladite passerelle, par exemple le protocole INAP (« Intelligent Network Application Protocol », partie applicative pour des applications intelligentes sur protocole SS7), CAP (« CAMEL Application Part » en anglais, partie applicative du protocole CAMEL « Customised Applications for Mobile network Enhanced Logic » en anglais, permet à un opérateur de télécommunications de fournir, à l'intérieur ou en dehors de son propre réseau, des services particuliers à ses utilisateurs, telle que la facturation en temps réel), MAP (« Mobile Application Protocol» en anglais, protocole pour applications mobiles), ISUP (« ISDN User Part » en anglais, partie utilisateur du protocole ISDN (« Integrated Services Digital Network », en anglais, RNIS en français, Réseau Numérique à Intégration de Services)), SIP (« Session Initiation Protocol » en anglais, protocole standard d'initiation d'une session réseau interactive), ou autre.

Le module d'administration (13) échange des informations avec le Network Browser (15) via un lien (108) et à l'aide par exemple de protocoles SNMP (« Simple Network Management Protocol » en anglais, protocole simple de gestion de réseau), TCP/IP (« Transmission Control Protocol », en anglais, protocole de base pour l'échange des données dans un réseau), ou autres. Le Network Browser (15) échange des données avec la base de données et de profilage (19) via le lien (103) à l'aide de protocoles de type IP.

Ladite base de données et de profilage (19) contient des informations, par exemple sur des listes blanches et des listes noires concernant des utilisateurs diverses, sur les profils des utilisateurs, sur les profils des services, sur les profils des logiques des services (la logique des services étant les règles de combinaisons et d'enchaînements de services) et sur des statistiques diverses d'usage utilisées dans l'analyse et la gestion des services. Le module (19) comporte également des modules de définition statique ou dynamique d'au moins un profil d'utilisateur, d'au moins un profil de service et d'au moins un profil de logique des services.

Avantageusement, ladite base de données et de profilage (19) comporte des logiques des services et des profils de logiques, des mécanismes de routage, par exemple des services clés de type MSISDN (« Mobile Station ISDN » en anglais, ISDN de la station mobile), IMSI (« International Mobile Subscriber Identity » en anglais, identité mobile internationale du souscripteurs), le numéro de l'abonné appelé, le numéro de l'abonné appelant et autres, des sous bases de données correspondantes à chaque utilisateur et/ou service. Les différents profils de l'utilisateur et/ou de services et/ou des logiques des services sont activés séparément de manière différenciée ou bien simultanément. La différenciation des utilisateurs, les utilisateurs étant des abonnés et/ou des groupes d'abonnés et/ou des tierces applications ou services, est effectuée en temps réel à l'aide d'une « customisation » (en anglais, personnalisation) statique ou dynamique.

Le CENTRE RESEAU MULTISERVICES (10) est connecté à travers la passerelle de réseau (18) à un ensemble d'éléments (130) d'un « Gore Network » (« Core Network » en anglais, réseau central de base ou coeur de réseau de télécommunications). Ce Ce « Core Network » est par exemple de type coeur de réseau GSM (« Global System for Mobile » en anglais, système global de télécommunications pour la téléphonie mobile), GPRS (« General Packet Services » en anglais, système de télécommunications par accès avec services par paquets), UMTS (« Universal Mobile Télécommunications System » en anglais, système de télécommunications mobiles universelles), 3G/3G+ et/ou tout autre coeur de réseau de type NGN. Par exemple, cet ensemble d'éléments (130) est un réseau de type SS7 et communique avec le CENTRE RESEAU MULTISERVICES (10) via un lien (107) par lequel les communications sont échangées à l'aide d'un protocole spécifique, par exemple MAP.

Dans un exemple plus général, le CENTRE RESEAU MULTISERVICES (10) est relié a l'ensemble (130) à travers la passerelle de réseau (18), via un lien (107) et un ou plusieurs protocoles de type SS7, SIGTRAN (ensemble de protocoles définis pour transporter des messages SS7 sur IP) ou autre. Par exemple, ledit lien (107) est constitué par un protocole CAP, par un protocole INAP, par un protocole SIP ou bien par un protocole « MEDIA » (protocole quelconque relatif à un transport de médias, tels que voix, son, images, vidéo ou autres).

Ledit ensemble d'éléments (130) de coeur de réseau comporte différents modules (ou éléments), avec lesquels la passerelle de réseau (18) échange des données. Par exemple, ces modules sont de type module HLR (« Home Location Register » en anglais, enregistreur de localisations domestiques), module VLR (« Visitor Location Register » en anglais, base de données dans un système de télécommunications qui contient les identifications des souscripteurs en cours d'utilisation), module MSC (« Mobile Switch Center » en anglais, centre de communications mobiles), module VMSC (« Visited Mobile Switching Center » en anglais, centre de services mobiles visité), module GMSC («Gateway Mobile Services Switching Center » en anglais, passerelle de services mobiles commutés) ou autre module quelconque, relatif aux réseaux.

La passerelle de réseaux (18) est également connectée à une plateforme de services (134) via un lien (106) et à l'aide de protocoles de type IP par exemple. La plateforme de services (134) est par exemple de type SMSC (Centre de SMS), passerelle WAP (« Wireless Application Protocol » en anglais, protocole d'application sans fil, passerelle OTA (« Over The Air » en langue anglaise, protocole standard de transmission et de réception pour les informations relatives à une application pour téléphones mobiles), module IVR (« Interactive Voice Response » en anglais, réponse interactive par la voix), module de type GPRS (par exemple module MMSC, en anglais « Multi Media Messaging Service Center », centre de service de messages multimédias), ou autre module quelconque d'applications réseaux. Cette plateforme (134) est également reliée à l'ensemble d'éléments (130) de coeur de réseau de télécommunications via un lien (133) et à l'aide de protocoles standards ou spécifiques, par exemple de type SS7 ou IP.

Le CENTRE RESEAU MULTISERVICES (10) est relié via un lien (123) qui est par exemple de type IP, à un ensemble (120) de réseaux de type IP par exemple, au sein duquel sont contenus divers protocoles, reliés à des plateformes d'applications et de services, de type module (11) de services opérateurs de télécommunications ou de tierces parties, module (12) de services mobiles à valeur ajoutée et/ou module (136) de systèmes dits réseaux intelligents et de support d'affaires (136). A travers cet ensemble de réseaux (120), le CENTRE RESEAU MULTISERVICES (10) a donc accès à des plateformes (12), par exemple de type VAS (« mobile Value-Added Services » en anglais, services mobiles à valeur ajoutée). Les données entre le réseau (120) et la plateforme (12) sont échangées via un lien (121) à l'aide de protocoles standards, tels que par exemple VXML/ HTTP (« HyperText Transfer Protocol » en anglais, protocole de transfert de texte), SOAP/HTTP (« Simple Object Access Protocol" en anglais, protocole standard destiné aux services Internet, XML/ HTTP, SMPP, SQL (en anglais, Structured Query Language, langage structuré de requêtes destiné à interroger ou à manipuler une base de données relationnelle), ou bien à l'aide de protocoles propriétaires tels que par exemple de type « ORACLE »® (une base de données relationnelle), « MySQL»® (une base de données relationnelle), LDAP (« Lightweight Directory Access Protocol » en anglais, protocole simplifié pour accès à des bases de données), RADIUS (en anglais « Remote Authentication Dial-In User Service », protocole client-serveur permettant de centraliser des données d'authentification), DIAMETER (protocole d'authentification et de facturation, une évolution du protocole RADIUS), MML (« Man-Machine Language » en anglais, langage homme-machine ), ou autres types de protocoles.

Dans un mode de mise en oeuvre à travers le réseau (120), le CENTRÉ RESEAU MULTISERVICES (10) a accès à une plateforme (11), de type par exemple ASP (« Applications Services Providers » en anglais, fournisseurs d'applications et de services), ou de type MVNO (« Mobile Virtual Network Operator » en anglais, opérateurs de réseau mobile virtuel), ou d'autres tierces parties comme par exemple des banques, avec lesquelles à travers le réseau (120), le CENTRE RESEAU MULTISERVICES (10) échange des informations via un lien de type (121) à l'aide des protocoles susmentionnés.

Dans un mode particulier de réalisation, une partie de l'ensemble de réseaux (120) est reliée avec une ou plusieurs plateformes de l'ensemble (130) via un lien (122) de type par exemple MML ou TELNET (« TELecommunication NETwork en anglais », protocole de réseau permettant d'exécuter des commandes à distance). Cela est une manière efficace et pratique pour le CENTRE RESEAU MULTISERVICES (10), de proposer l'approvisionnement, la consultation, l'interaction et/ou la modification des informations gérées dans un ensemble d'éléments (130) de coeur de réseau.

Dans un mode de réalisation, le CENTRE RESEAU MULTISERVICES (10) à travers le lien (107) et l'ensemble d'éléments (130) a accès à la plateforme de services (136) de type par exemple BSS (« Business Support Systems» en anglais, système de support d'affaires) via un lien (137) à l'aide de protocoles de type INAP, MAP, CAP, CDR (« Call Data Records » en anglais, enregistrements de données de l'appel ou autres) ou autres. Le module BSS (136) est par exemple de type module de facturation post payé ou bien un module de facturation prépayée, ou par exemple module de type IN (« Intelligent Network » en anglais, réseau intelligent, concept définissant des fonctions avancées pilotant des équipements du réseau téléphonique).

Dans un mode de réalisation particulier, le CENTRE RESEAU MULTISERVICES (10) à travers le lien (123) et le réseau (120) a accès à la plateforme de services (136) via un lien (125) lui même constitué de protocoles standards ou propriétaires, spécifiques à la plateforme (136), tels que par exemple le protocole « Ericsson »® UCIP (« User Communication Intégration Protocol » en anglais, protocole spécifique de « Ericsson »®), le protocole « Huawei »® MML, le protocole d'applications « Corba » pour NSN (« Nokia Siemens Networks »®) IN, le protocole Corba pour « Alcatel »® BSS, le protocole Corba pour « LHS »® BSS ou autres.

Dans un mode de réalisation particulier, les modules (11) et/ou (12) et/ou (136), à travers le réseau (120) et le lien (124), sont intégrés directement avec la passerelle de réseaux (18), ledit lien (124) étant constitué de protocoles tels que décrits concernant le lien (121) et/ou (125).

L'architecture générique décrite dans cet exemple non limitatif, comprenant les modules et les liens illustrés en figure 1, présente un système dynamique et interactif pour la création, l'orchestration, l'accès et l'utilisation d'applications et de services multiples par les utilisateurs d'au moins un réseau de télécommunications et/ou informatique.

Egalement, des fonctionnalités réseaux d'usage difficile, telles que des services réseaux comprenant un contrôle d'appels complexes (MCC, RB, ICS, Roaming prépayé voix, SMS, données et autres), service à modèles de facturation complexes, sont rendues pratiques et simples d'utilisation grâce au CENTRE RESEAU MULTISERVICES (10). De plus, des services simultanés et en temps réel sont proposés, tel que par exemple la différentiation des utilisateurs et/ou des services ou encore leur orchestration.

Avantageusement sont rajoutés des modules supplémentaires de type (11), (12) et/ou (136), d'opérateurs de télécommunications ou de tierces parties.

De cette manière, l'architecture illustrée sur la figure 1, incluant le CENTRE RESEAU MULTISERVICES (10), le réseau (120) et les modules (11), (12) et (136), présente des propriétés de scalabilité adaptée à la capacité de traitement de l'information en terme de données, d'applications, de services, de réseaux ou autres.

Le CENTRE RESEAU MULTISERVICES (10) gère les applications et les services en fonction des ressources du réseau et planifie l'acheminement de chaque tâche en fonction des bandes passantes disponibles et en fonction des requêtes demandant des allocations de ressources supplémentaires.

Dans un mode de réalisation particulier, les opérateurs de télécommunications ont accès à cette architecture afin de tester fonctionnellement et en charge des systèmes externes. Le CENTRE RESEAU MULTISERVICES (10) offre donc cette possibilité de connections et de tests de modules additionnels.

Avantageusement, toutes les connexions du CENTRE RESEAU MULTISERVICES (10) vers des systèmes externes sont établies en fonctions des pré-requis de sécurité de ces systèmes. Les échanges sont non sécurisés ou sécurisés à l'aide d'un cryptage, de type par exemple SSL (« Secure Socket Layer » en anglais, protocole qui permet de chiffrer les données envoyées par un navigateur, ou autre).

La présente invention est détaillée par la suite avec des exemples de réalisation préférés et non limitatifs.

Un exemple de mise en oeuvre préféré du CENTRE RESEAU MULTISERVICES (10) est représenté sur la figure 2.

Dans un mode préféré de mise en oeuvre, le Network Browser (15) est conçus à partir d'un module LIB (16) basé sur un interpréteur de langage structuré par exemple VXML et à partir d'un module CCB (17) basé sur un interpréteur de langage structuré par exemple CCXML.

Dans un exemple particulier de réalisation, l'interpréteur de langage CCXML du module CCB (17) est étendu pour supporter tout protocole de communications supplémentaire (ne se limitant pas à des appels voix) afin d'effectuer la gestion, la coordination et la hiérarchisation des services coeur de réseaux mobiles (services de signalisation, voix, données, multimédia et autres). Ces protocoles de communications supplémentaires sont par exemple de type SCCP (« Signaling Connection Control Part » en anglais, protocole de signalisation et de contrôle de la connexion), TCAP (« Transaction Capabilities Application Part » en anglais, partie pour les capacités de transactions de l'application), MAP, INAP, CAMEL, DIAMETER, H.323, MGCP (« Media Gateway Control Protocol » en anglais, protocole de contrôle de passerelle Media), CORBA et autres protocoles de télécommunications ou de traitement de l'information. Le module CCB (17) effectue principalement des actions (de haut niveau mais aussi de bas niveau) de contrôle d'appels et communique via les liens de type (102) avec la passerelle de réseau (18), à l'aide de protocoles IP contenant des représentations objets des protocoles de type (107). Ces objets seront manipulés et traités dans le module CCB (17) en fonctions des besoins des services requis.

Dans un exemple particulier de réalisation, l'interpréteur de langage VXML du module LIB (16) est étendu pour supporter tout protocole de communications supplémentaire, lesdits protocoles de communications supplémentaires n'étant pas liés uniquement aux appels voix traditionnels.

Le module LIB (16) effectue principalement des actions de gestion et d'exécution de services et communique via les liens de type (102) avec la passerelle de réseau (18), à l'aide de protocoles IP contenant des représentations objets des protocoles de type (107). Ces objets seront manipulés et traités dans le module LIB (16) en fonctions des besoins des services requis.

Le module LIB (16) communique avec le module CCB (17) via un lien (235) permettant l'échange d'objets (par exemple objet d'information et/ou d'instruction et/ou de protocoles).

Le Network Browser (15) comprend également un module (24) qui contient des services déployés, prêts à être exécutés, par exemple représentés à l'aide de langage structurés de type XML. Lesdits services sont par exemple des services activés, des services inactifs, ou bien des services dans un état intermédiaire (en attente, suspendus, interrompus ou autre).

Le module CCB (17) et le module LIB (16) communiquent avec ce module (24) respectivement via des liens (237) et (233), à l'aide desquels ils récupèrent à la demande les services sous forme d'objets. Ces services sont interprétés et exécutés par le module LIB (16) et/ou par le module CCB (17). Lesdits interpréteurs des modules LIB (16) et CCB (17) utilisent des mémoires virtuelles (ou « caches ») internes pour les requêtes déjà interprétées et ainsi, toutes les requêtes déjà interprétées, sont effectuées sans navigation, c'est-à-dire sans nouvelle interprétation de la structure arborescente déjà parcourue.

Dans une variante, le module LIB (16) et module CCB (17) sont confondu en un seul module.

L'administration de gestion (13) du CENTRE RESEAU MULTISERVICES (10) est reliée avec le Network Browser (15) via le lien (108), à l'aide duquel ce module d'administration (13) communique avec les module (16) et/ou (17) et/ou (24).

Dans sa définition la plus générale, le module d'administration (13) comprend des services réseaux déjà existants, regroupés par exemple dans des fichiers, une logique d'orchestration de services, une administration système de type WEB, incluant un environnement de création de services « SCE » (de «Service Création Environment » en anglais), de contrôle, de logique et de commutation de services, de test, de déploiement et de gestion de versions de ces services. Le module d'administration (13) comprend également des fonctionnalités de contrôle système du CENTRE RESEAU MULTISERVICES (10) et des fonctionnalités de configurations des paramètres, de la base de données et de profilage (19), des passerelles réseaux (18) et des passerelles d'intégration (14).

Dans une variante, le CENTRE RESEAU MULTISERVICES (10) propose une gestion de services et de contenus effectuée directement par les utilisateurs, les utilisateurs étant des abonnés ou des tierces parties. Par exemple, les services et les contenus sont crées ou personnalisés par l'utilisateur lui-même à l'aide d'un site WEB ou bien directement à l'aide du terminal mobile.

Ledit environnement de création est accessible localement, à distance ou depuis un terminal par l'opérateur et/ou par les tierces parties et/ou par les utilisateurs eux-mêmes.

Le module d'administration (13) effectue également la régulation des connexions, la collecte et l'analyse des données et des statistiques. Le module d'administration (13) est relié avec au moins un autre module interne du CENTRE RESEAU MULTISERVICES (10), autre que le Network Browser (15). Le module d'administration (13) est par exemple relié avec la passerelle d'intégration (14) via un lien (213), avec la passerelle de réseau (18) via un lien (211) et avec la base de données et de profilage (19) via un lien (212).

Grâce à la base de données et de profilage (19), le CENTRE RESEAU MULTISERVICES (10) a la possibilité de déterminer en temps réel le profil d'un utilisateur ou d'un service, ou d'un groupe d'utilisateurs ou d'un groupe de services, ou d'une communauté d'utilisateurs ou d'une communauté de services. Sous le terme « profil de l'utilisateur » est entendu l'ensemble des caractéristiques relatives à au moins une connexion et à au moins une session, par exemple : une adresse IP, un numéro de téléphone, localisation, heure et date de la connexion, durée de la connexion, langue de la connexion et de la navigation, position géographique, types d'applications et de services requis, contenus sollicités et tout autre caractéristique relative à cette connexion. Le profil de l'utilisateur est complété par son profil d'usage relatif à au moins un service et à l'ensemble des paramètres propres aux sessions vers ce service.

Grâce à la base de données et de profilage (19), le CENTRE RESEAU MULTISERVICES (10) a la possibilité de déterminer en temps réel le profil d'un service ou d'un ensemble de services. Ce profil est constitué d'informations telles que par exemple l'accessibilité réduite pour des services gratuits ou pour un groupe particulier d'utilisateurs, la définition de listes blanches et noires, ou autres.

De préférence, le CENTRE RESEAU MULTISERVICES (10) contient une configuration multilingue pour toute la chaîne de bout en bout (entre les utilisateurs et les fournisseurs de services par exemple). Aussi, la logique des services est indépendante des langues pour toute la chaîne de bout en bout.

La base de données et de profilage (19), comprenant des fonctionnalités de définition d'au moins un profil d'utilisateur, d'au moins un profil de service et d'au moins un profil de logique de services, échange des informations séparément avec le module (14) via un lien (215), avec le module (15) via le lien (103), avec le module (13) via un lien (212) et avec le module (18) via un lien (216). De cette manière, des informations de configuration, des différentes données d'administration, des statistiques et des informations sur les différents types de profils sont complétées, utilisées et inter-changées entre les modules (14), (15), (13) et (18).

Dans un exemple de réalisation particulier, la base de données et de profilage (19) est connectée uniquement avec le Network Browser (15) via le lien (103), dans ce cas les liens (215), (212) et (216) sont omis. De préférences, la base de données et de profilage (19) contient des informations sur les caractéristiques des sessions et des statistiques statiques et dynamiques.

Dans un premier mode de mise en oeuvre préféré, le Network Browser (15) contient des fonctions « mutli-triggering » (en anglais déclenchements multiples d'actions par type d'appel. Ces déclencheurs sont par exemple définis dans la base de données et de profilage (19) et utilisés par le Network Browser (15) pour exécuter et contrôler les différents services relatifs à un type d'appel. En effet, dans le réseau GSM de toute génération est provisionné un seul déclencheur par type d'appel (par exemple un seul déclencheur pour les appels voix entrants dans le réseau (MOC « Mobile Originating Call » en anglais, appel émis à partir d'origine mobile), un seul déclencheur pour les appels voix sortant du réseau (MTC, « Mobile Terminating Call » en anglais, appel transmis vers une origine mobile). Il est de même pour d'autres types d'appels tels que SMS, GPRS etc. Afin de palier à ces limitations du réseau GSM le Network Browser (15) fournit la possibilité d'offrir, de gérer et d'orchestrer plusieurs déclencheurs par type d'appel.

En résumé les principales fonctionnalités du Nework Browser (15) se résument dans des les :
- Contrôles d'appels et de services ;
- Orchestrations d'appels et de services ;
- « Multi-Trigerring » en langue anglaise, déclenchements multiples et illimités;
- Sessions parallèles de gestion d'appels et de services ;
- Divers machines d'états d'appels et de services ;
- Gestions de différentes sources d'événements ;
- Interprétations et exécution de services et de logique de services ;
- Réponses en temps garantie et Qualité de Service « QoS » (de « Quality Of Service » en anglais) pendant au moins une session ;
- Utilisations souple de multiples temporisateurs ;
- Gestions des services en local et/ou à distance et/ou en provenance de parties tierces ;
- Profilages des utilisateurs et des services.

Ces fonctionnalités sont énumérées à titre illustratif mais non limitatif. En effet le Network Browser (15) est configurable pour fournir une multitude de services supplémentaires à la demande. De plus le Network Browser (15) gère des services en local et/ou à distance et/ou en provenance de parties tierces.

L'architecture ouverte du Network Browser (15) permet d'intégrer, sans modifications, des extensions relatives aux modules passerelle d'intégration (14) et/ou passerelle de réseau (18).

Dans un deuxième mode de mise en oeuvre préféré, le CENTRE RESEAU MULTISERVICES (10) est configuré en tant que plateforme de type « Hosting » en anglais, ou hébergement d'applications et de services extérieurs ou de tierces parties. Les tierces parties accèdent de manière sécurisée à la fonctionnalité de création et à l'activation d'applications et de services. Le mode de mise en oeuvre d'hébergement dans la présente invention permet aux opérateurs de télécommunications de mettre en place des services réseaux gérés par des tierces parties, comme par exemple des fournisseurs de services. L'accès des tierces parties est entièrement sécurisé. Les opérateurs de télécommunications créent un ou plusieurs comptes pour chaque tierce partie en attribuant au moins un accès réseau et des ressources réseau. Chaque fournisseur de services utilise la même interface utilisateur que l'opérateur de télécommunications et opère à distance sa propre application réseau, dans les limites d'exploitation attribués par l'opérateur de télécommunications. Pour chaque fournisseur de services, un historique des activités et des opérations est enregistré. De plus, cet environnement de création de services et d'applications est fourni non seulement aux fournisseurs de services, mais aussi aux utilisateurs divers et aux abonnés, qui de cette manière adaptent et personnalisent leurs propres applications, services et contenus.

Dans un troisième mode de mise en oeuvre préféré, le CENTRE RESEAU MULTISERVICES (10) est configuré en tant que « Proxy » réseau (module d'un réseau numérique connecté à un autre réseau et effectuant des requêtes et leur sauvegarde pour des besoins de services). Cette mise en oeuvre permet par exemple de mettre en place des services de Roaming prépayé à l'aide simplement de passerelle CAP/INAP comprises dans la passerelle réseau (18). Ainsi le CENTRE RESEAU MULTISERVICES (10) agit en tant que Proxy CAMEL SCP pour des réseaux CAMEL visités et permet aux Roamers en mode prépayé et sortant du réseau, d'initier des appels, a l'inverse de l'art antérieur proposant uniquement de solutions nécessitants la mise a jour complète en CAMEL du réseau.

Dans un quatrième mode de mise en oeuvre préféré, le CENTRE RESEAU MULTISERVICES (10) est configuré en tant que plateforme de routage active, qui procure une médiation entre différents éléments du réseau et résout des problèmes liés au routage des utilisateurs, des services et des applications. Ces problèmes sont par exemple le routage de l'utilisateur prépayé ou post-payé vers une plate-forme BSS (136), le routage de type MNP (« Mobile Number Portability » en anglais, portabilité du numéro de mobile) et autres.

Lorsque le CENTRE RESEAU MULTISERVICES (10) remplit des fonctions de routeur, il a la capacité d'effectuer des modifications statiques ou/et dynamiques des paramètres commutés et d'effectuer des fonctions de partage de charge.

Dans un cinquième mode de mise en oeuvre préféré, le CENTRE RESEAU MULTISERVICES (10) est configuré pour effectuer de la diffusion de type Broadcast de données et de services vers une multitude d'utilisateurs, comme par exemple de diffuser des publicités, des alertes ou des informations utiles. Dans une variante, la diffusion Broadcast est suivie d'une réponse de l'utilisateur et d'un échange interactif, par exemple pour des applications telles que des enquêtes de consommation et des sondages.

De plus, un environnement de création de services Broadcast permet aux fournisseurs de services et à l'utilisateur final, d'adapter et de personnaliser leurs propres diffusions Broadcast.

Avantageusement l'environnement Broadcast du CENTRE RESEAU MULTISERVICES (10), permet aux opérateurs de lancer aussi des services Broadcast classiques, tels que IVR, SMS, USSD, WAP, GPRS ou 3G/3G+.

Dans un exemple de réalisation dudit CENTRE RESEAU MULTISERVICES (10), le Network Browser (15) communique via un lien (261) avec un module (26) de tarification et via un lien (251) avec un module (25) de facturation. De cette manière les services et les contenus sollicités par un même utilisateur final sont généralement soumis à un contrôle et à une facturation, qui est de type prépayée en temps réel ou de type différée avec abonnement ou bien de type mixte ou convergent.

Cet exemple de réalisation est appliqué pour tout type d'utilisateurs : avec abonnement, en mode prépayé, itinérant, fixes ou nomades. Le CENTRE RESEAU MULTISERVICES (10) gère par exemple la facturation par abonnement ou en mode prépayé, en utilisant une approche dite procédure de payement externe. Une procédure spécifique de facturation externe est spécifiée dans la logique des services, pendant la création du service et est déclenchée en temps réel durant la session de l'utilisateur. Les procédures de payement sont en conformité avec les procédures spécifiques de payement d'un opérateur ou d'une tierce partie. Pendant la session, un utilisateur itinérant est également identifié, de manière à ce que ses services soient pris en compte de manière appropriée pendant les traitements.

Dans un mode particulier de réalisation, les utilisateurs souscrivent à un service quelconque à l'aide du CENTRE RESEAU MULTISERVICES (10). De préférence, le CENTRE RESEAU MULTISERVICES (10) comprend une fonctionnalité de modification ou d'annulation automatique de la souscription, ou bien à la demande de l'utilisateur ou bien à celle du fournisseur de services.

Dans un mode de mise en oeuvre particulier dudit CENTRE RESEAU MULTISERVICES (10), le Network Browser (15) communique via un lien (271) avec un module (27) d'observation et de classement, pour lequel un procédé d'observation et de classement de l'usage et du comportement des utilisateurs est défini. De préférence, ledit procédé d'observation et de classement effectue l'observation, l'analyse et le classement des contenus, des services, du comportement des utilisateurs, des fournisseurs et autres et cela en temps réel ou différé. Ce procédé est utilisé par exemple pour l'analyse et le classement de la sollicitation des services et de leurs sous-parties, ainsi que pour la génération de revenus. Les paramètres d'observation et de classement sont définis pendant ou après le processus de création du service par le module d'administration (13).

Durant la session, le module d'administration (13) génère en temps réel les paramètres demandés et crée automatiquement un événement d'observation ou/et de classement.

Avantageusement, la tarification et/ou de changement de la tarification, la facturation et le classement sont effectués par le CENTRE RESEAU MULTISERVICES (10) et/ou par des plateformes externes spécialisées.

Dans un mode particulier de mise en oeuvre, le module de facturation (25), le module de tarification (26) et le module d'observation et de classement (27) sont intégrés à l'intérieur du module Network Browser (15).

De préférence, le CENTRE RESEAU MULTISERVICES (10) génère des fichiers au format CDR. Une fois créés, ces fichiers par exemple de facturation sont à la disponibilité de l'opérateur de télécommunications ou des fournisseurs de services. La fréquence de mise à jour de ces fichiers est par exemple, au moins une fois par minute. Leur format est par exemple de type « ASN.1 Structured » («Abstract Syntax Notation One Structured» en anglais, manière standard de description d'un message envoyé ou reçu par le réseau).

Dans un mode particulier de mise en oeuvre, la syntaxe des fichiers CDR est adaptée par l'opérateur de télécommunications et certains paramètres sont modifiés. Les différents formats CDR sont générés à l'aide de paramètres prédéfinis. Pour chaque noeud dans l'arborescence de la logique du service le choix de formats CDR et de leurs usages par un administrateur est flexible. Avantageusement, un regroupement de messages en seul message destiné à un élément particulier est effectué. Ledit administrateur de réseau est dans ce cas un opérateur, un fournisseur de services ou toute tierce partie à laquelle l'administration du service a été déléguée.

Par la suite, la présente invention sera mieux comprise à l'aide d'exemples de réalisation illustratifs et non limitatifs, mis en oeuvre à l'aide de l'architecture en référence à la figure 1 et à la figure 2.

Dans le cas général, un procédé de création et d'activation de services (procédé pouvant être effectué en temps réel ou en temps différé) est défini incluant plusieurs étapes, dont par exemple une étape de création d'au moins un service, une étape de création d'au moins une logique de services, une étape d'intégration de la logique de services dans le CENTRE RESEAU MULTISERVICES (10) et son environnement coeur de réseau et des services tiers, une étape d'orchestration de services existants et/ou nouveaux, une étape de gestion de sessions multiservices, une étape de test, de validation, de mise en version des services et une étape de déploiement et d'activation desdits services dans le Network Browser (15). Par la suite ces services sont ouverts aux utilisateurs.

Dans un premier exemple de réalisation, le CENTRE RESAU (10) définit et gère le service MCC. Le service MCC permet aux opérateurs de télécommunications d'inverser le scénario de la facturation, c'est-à-dire de facturer le récepteur et non pas l'émetteur, ou les deux suivant des cas d'usages et d'intégration spécifiques à chaque opérateur. Pour sa réalisation, le service MCC utilise une multitude d'élément fonctionnels et de passerelles d'intégration et de réseaux.

A l'aide de son environnement ouvert, le système se prévaut d'une importante flexibilité. La logique des services est développée et personnalisée facilement pour chaque opérateur de télécommunications. La gestion simplifiée de la logique de service et des passerelles d'intégration et de réseaux du CENTRE RESEAU MULTISERVICES (10) permet à l'opérateur la mise en place rapide du service MCC.

La passerelle de réseau (18) dans ce cas est par exemple composée de plusieurs passerelles. Chaque passerelle assure des tâches diverses. Par exemple, une passerelle de type IVR pour aviser le récepteur de la facturation inversée, une passerelle de type CAP pour la facturation inversée temps réel, une passerelle MAP pour récupération temps réel des informations relatives à l'émetteur et au récepteur (telles que par exemple la localisation, le type de facturation prépayée ou bien post-payée, et autres), une passerelle USSD pour le déclenchement du service par USSD, et autres. D'autre part la passerelle d'intégration (14) est composée de passerelles de type SMPP, HTTP, CORBA, FTP et autres.

Dans le même contexte de réalisation du service MCC décrit, d'autres services complexes sont mis en place tel que par exemple le service ICS (« Intelligent Call Screening », en anglais filtrage intelligent d'appels), le service de contrôle de SMS depuis ou vers un terminal mobile itinérant et autres.

Un autre exemple préféré de réalisation est le procédé mis en place à l'aide du CENTRE RESEAU MULTISERVICES (10) pour la tarification et la facturation d'une grande communauté d'abonnés, constituée de plusieurs centaines d'abonnés. Ce service de communauté mobile dit CCS (« Community Charging Service » en anglais, service de tarification et de facturation de communauté) mis en place, permet aux opérateurs de télécommunications de gérer les sessions des communautés de taille importante. A l'inverse des services orientés communauté d'amis ou communauté familiale concernant de petits groupes de souscripteurs, le service mis en place permet la gestion de plusieurs centaines de milliers d'utilisateurs, que se soit des abonnés en mode post payé ou bien en mode prépayé ou en mode mixte. Par exemple, un service ICS est implémenté pour les Roamers sortants avec un filtrage automatique des appels et des fonctions de routage d'appel. Ce service CCS comprend la gestion de listes noires et de listes blanches, ainsi que d'autres fonctionnalités multiples.

Ce service CCS est déployé dans le coeur de réseau de télécommunications par exemple en tant que passerelle non intrusive de routage et de Proxy vers une plate-forme IN, et configurée en tant que Proxy intervenant uniquement lors de la négociation des appels CCS. La plateforme CENTRE RESEAU MULTISERVICES (10) avec son service CCS applique une logique de traitement appropriée à la communauté et renvoie les appels vers une plateforme IN. Lors de ce renvoi le service CCS désigne l'indice de tarification approprié, utilisé pour la facturation par l'IN. Par la suite l'IN continuera le contrôle de l'appel CCS directement avec le coeur du réseau. Ceci n'est possible que grâce à la capacité du CENTRE RESEAU MULTISERVICES (10) à se substituer au coeur du réseau. L'avantage de ce fonctionnement est la possibilité de la mise en place rapide et flexible de nouveaux services de type coeur de réseau, tout en laissant la partie critique de contrôle d'appel continu à l'IN et au coeur du réseau.

La solution technique de la présente invention supporte un grand nombre de plateformes et de protocoles, par exemple, une pluralité de protocoles MSC et IN (« Ericsson »® MSC, « Huawei »® MSC, « Huawei »® IN, « Ericsson »® IN, « Telenity »® IN), CAP v1-v4, CSI (« « Cisco »® SAFE Implementation » en anglais, une implémentation « Cisco »®), CSI+, INAP (« Intelligent Network Application Protocol », partie applicative pour des applications intelligentes du protocole SS7), SIP (« Session Initiation Protocol » en anglais, protocole standard d'initiation d'une session réseau interactive), Radius (extension IP pour mobile), Diameter (extension IP pour mobile), SCAP Diameter (« Service Charging Application Protocol » en anglais, protocole de service pour la facturation d'applications), UCIP (« User Communication Intégration Protocol » en anglais, protocole propriétaire de « Ericsson »®), Parlay (protocole standard ouvert), MAP v1-v3, AIN (« Advanced intelligent network » en anglais, réseau intelligent avancé), WIN (protocole « Microsoft Windows »®) et bien d'autres.

Avantageusement, les caractéristiques et les fonctionnalités techniques relatives au support des services multiples concernant le mode local et le mode Roaming, pour l'activation de services offerts par des plateformes diverses, fournies par le CENTRE RESEAU MULTISERVICES (10) ainsi définit, sont par exemple :
- La transparence du CENTRE RESEAU MULTISERVICES (10) lui-même vis-à-vis des fonctionnalités ou des éléments du coeur de réseau, par exemple de type SSP et SCP ;
- Le support du CENTRE RESEAU MULTISERVICES (10) de divers mécanismes de signalisation, comme par exemple la signalisation de type Proxy, dans laquelle la passerelle de réseau (18) (ou bien le CENTRE RESEAU MULTISERVICES (10) lui-même) agit en tant que Proxy pour une partie ou l'ensemble des messages du réseau de télécommunication, ou bien la signalisation collaborative triangulaire, dans laquelle la passerelle de réseau (18) ne représente pas un intermédiaire ;
- La capacité d'effectuer une conversion stable et flexible entre deux quelconques ou plusieurs quelconques protocoles différents;
- La capacité d'interpréter des déclenchements indépendamment des services réseaux, tels que par exemple les services de type HPLMN (« Home Public Land Mobile Network » en anglais, réseau mobile publique domestique) et VPLMN (« Visited Public Land Mobile Network » en anglais, réseau mobile publique d'itinérance);
- La capacité de combiner et d'orchestrer différentes catégories de services. Par exemple, dans une variante, le CENTRE RESEAU MULTISERVICES (10) effectue uniquement des services de contrôle d'appels entrants, dans autre variante le CENTRE RESEAU MULTISERVICES (10) effectue uniquement des services de contrôle d'appels sortants et dans une variante particulière, le CENTRE RESEAU MULTISERVICES (10) effectue des services de contrôle d'appels entrants et sortants;
- La capacité d'activer de nouveaux services, sans affecter les services déjà actifs ;
- La capacité d'effectuer des interactions en modifiant librement des paramètres d'un ou plusieurs messages, le regroupement de messages en seul message destiné à un élément du réseau particulier et le multiplexage de messages destinés audits éléments concernés;
- La capacité de combiner des services et des profils, de support des paramètres de gestion des états, du temps, et autres;
- La capacité d'effectuer pendant une interaction un transfert d'informations supplémentaires à travers les différents éléments du réseau;
- La capacité d'effectuer une réponse différée, par rapport à un état précédemment déclenché ;
- La capacité de gérer les services activés par différents éléments pour le même appel.

Le CENTRE RESEAU MULTISERVICES (10) est par exemple réalisé à l'aide de plateformes matérielles de type HP (« Hewlett Packard »®), FSC (« Fujitsu-Siemens Computers »®), IBM (« International Business Machines »®) ou « SUN Microsystems »®. Le système opérationnel est par exemple de type « Red Hat Enterprise »® ou « Fedora Linux »®, ou de type « Sun Solaris »®. Avantageusement, le CENTRE RESEAU MULTISERVICES (10) est réalisable également sur des plateformes d'entrée de gamme, ce qui a pour résultat une accessibilité et une réduction importante des coûts de mise en oeuvre.

## Revendications

1. Système numérique de télécommunications pour la création, l'intégration, la gestion, le déploiement, l'activation, le regroupement et l'orchestration de services provenant de plateformes de services diverses, avec différentes logiques d'orchestration ou de services en fonction d'une variété de combinaisons entre les services, le système étant un système d'applications et de services (10), dit CENTRE RESEAU MULTISERVICES (10), situé au sein d'au moins un coeur de réseau de télécommunications mobiles,
ledit CENTRE RESEAU MULTISERVICES (10) comprenant:
- au moins un module (15) serveur d'applications et d'orchestration de services, dit Network Browser (15), comprenant au moins un module (17) serveur de contrôle et d'orchestration d'appels, dit module CCB (17) et au moins un module (16) serveur de logique d'orchestration et d'intégration de services, dit module LIB (16), lesdits services :
o étant des services réseaux mobiles, fixes, IP, convergents, nouvelles générations et/ou des services coeur de réseau de télécommunications mobiles ;
o étant compatibles avec au moins un protocole standard ;
- au moins un module (18) passerelle de réseau, communiquant avec ledit Network Browser (15) et reliant ledit Network Browser (15) à au moins un ensemble (130) d'éléments dudit coeur de réseau de télécommunications mobiles;
- au moins un module (14) passerelle d'intégration, communiquant avec ledit Network Browser (15) et reliant ledit Network Browser (15) à travers au moins un réseau de type IP (120) avec au moins un module (11) de services d'opérateurs de télécommunications ou de tierces parties et/ou à au moins un module (12) de services mobiles à valeur ajoutée;
- au moins un module (19) base de données et de profilage, communiquant avec ledit Network Browser (15), et comprenant au moins une fonctionnalité de définition d'au moins un profil de logique de services, la logique de services étant des règles de combinaisons et d'enchaînements de services; et
- au moins un module (13) d'administration, communiquant avec ledit Network Browser (15), avec ledit module (18) passerelle de réseaux, avec ledit module (14) passerelle d'intégration et avec ledit module (19) base de données et de profilage, et comprenant des fonctionnalités de contrôle dudit CENTRE RESEAU MULTISERVICES (10) et de configuration desdits modules base de données et de profilage (19), passerelle de réseau (18) et passerelle d'intégrations (14), le module (13) d'administration comprenant aussi une logique de regroupement et d'orchestration de services et un environnement de création de services ;
ledit CENTRE RESEAU MULTISERVICES (10) étant:
- un système connecté à au moins une plateforme de services (134) de type SMSC, passerelle WAP, passerelle OTA, module IVR et/ou un module de type GPRS ;
- un système de tarification et de facturation de services en temps réel, comprenant au moins un module (26) de tarification, et/ou au moins un module (25) de facturation, et/ou au moins un module (27) d'observation et de classement, lesdits modules étant reliés au Network Browser (15);
- un système où le Network Browser (15) contient des fonctions de déclenchements multiples d'actions par type d'appel, lesdits déclenchements étant définis dans la base de données et de profilage (19) et utilisés par le Network Browser (15) pour exécuter et pour contrôler les différents services relatifs à un type d'appel ;
- un système de type Proxy effectuant une signalisation pour une partie ou un ensemble de messages du réseau de télécommunications mobiles.

2. Système selon la revendication 1, **caractérisé en ce que** lesdits modules CCB (17) et LIB (16) sont basés sur au moins un protocole de communications et sur au moins un interpréteur de langages structurés par objets, relatif à des descripteurs structurés par objets.

3. Système selon l'une des revendications 1 et 2, **caractérisé en ce que** ledit module CCB (17) est basé sur au moins un interpréteur de langage de type CCXML.

4. Système selon la revendication précédente, **caractérisé en ce que** ledit interpréteur de langage de type CCXML est étendu à l'aide de protocoles de communications supplémentaires tels que SCCP, TCAP, MAP, INAP, CAMEL, DIAMETER, H.323, MGCP, CORBA ou autres protocoles de télécommunications ou de traitement de l'information.

5. Système selon l'une quelconque des revendications 1 à 4, caractérisé en ce ledit module LIB (16) est basé sur au moins un interpréteur de langage de type VXML.

6. Système selon la revendication précédente, **caractérisé en ce que** ledit interpréteur de langage de type VXML est étendu à l'aide de protocoles de communications supplémentaires, lesdits protocoles de communications supplémentaires n'étant pas liés uniquement aux appels voix traditionnels.

7. Système selon l'une quelconque des revendications 1 à 6, **caractérisé en ce que** ledit module LIB (16) et ledit module CCB (17) sont confondus en un seul module

8. Système selon l'une quelconque des revendications précédentes, **caractérisé en ce qu'**au moins un module (13) d'administration ou au moins un module (14) passerelle d'intégration ou au moins un module LIB (16) ou au moins un module CCB (17) ou au moins un module (18) passerelle de réseau ou au moins un module Network Browser (15) ou au moins un module (19) base de données et de profilage est autosuffisant.

9. Système selon la revendication précédente, **caractérisé en ce que** ledit environnement de création de services est accessible localement, à distance ou depuis un terminal, par un opérateur et/ou par des tierces parties et/ou des abonnés eux-mêmes.

10. Système selon l'une quelconque des revendications précédentes, **caractérisé en ce que** lesdits services sont interactifs ou non interactifs et multilingues pour toute la chaîne de bout en bout.

11. Système selon l'une quelconque des revendications précédentes, **caractérisé en ce que** ladite logique de regroupement et d'orchestration de services est indépendante des langues des services pour toute la chaîne de bout en bout.

12. Système selon l'une quelconque des revendications précédentes, **caractérisé en ce que** ladite base de données et de profilage (19) comprend au moins une fonctionnalité de définition d'au moins un profil d'utilisateur et au moins une fonctionnalité de définition d'au moins un profil de service.

13. Système selon l'une quelconque des revendications précédentes, **caractérisé en ce qu'**il comprend des fonctionnalités de:
- Contrôles d'appels et de services ;
- Orchestrations d'appels et de services ;
- Déclenchements multiples et illimités ;
- Sessions parallèles de gestion d'appels et de services ;
- Machines d'états d'appels et de services ;
- Gestions de différentes sources d'événements ;
- Interprétations et exécution de services et de logique de services ;
- Utilisations de temporisateurs multiples ;
- Gestions des services en local et/ou à distance et/ou en provenance de parties tierces ;
- Profilages des utilisateurs et des services.
- Introductions et/ou gestions dans ledit coeur de réseau et dans au moins un élément (130) dudit coeur de réseau, des services à contrôle complexe;
- Ouvertures dudit coeur de réseau et d'au moins un élément dudit coeur de réseau à au moins un service, ledit au moins un service étant un service propre, un service d'opérateur, un service de tierces parties, un service de l'Internet ou tout autre service;
- Ouvertures dudit coeur de réseau et d'au moins un élément dudit coeur de réseau à au moins un autre réseau numérique.

14. Système selon l'une quelconque des revendications précédentes, **caractérisé en ce qu'**il est un système d'hébergement d'applications et de services de tierces parties.

15. Système selon l'une quelconque des revendications précédentes, **caractérisé en ce qu'**il a la capacité de se substituer à au moins un coeur de réseau de télécommunications mobiles.

16. Système selon l'une quelconque des revendications précédentes, **caractérisé en ce qu'**il est un système de diffusion de type Broadcast.

17. Procédé de traitement pour la création, l'intégration, la gestion, le déploiement, l'activation, le regroupement et l'orchestration de services provenant de plateformes de services diverses, avec différentes logiques d'orchestration ou de services en fonction d'une variété de combinaisons entre les services, mis en oeuvre dans un système d'applications et de services (10), dit CENTRE RESEAU MULTISERVICES (10) situé au sein d'au moins un coeur de réseau de télécommunications mobiles, ledit CENTRE RESEAU MULTISERVICES (10) comprenant:
- au moins un module (15) serveur d'applications et d'orchestration de services, dit Network Browser (15), comprenant au moins un module (17) serveur de contrôle et d'orchestration d'appels, dit module CCB (17) et au moins un module (16) serveur de logique d'orchestration et d'intégration de services, dit module LIB (16), lesdits services :
o étant des services réseaux mobiles, fixes, IP, convergents, nouvelles générations et/ou des services coeur de réseau de télécommunications mobiles ;
o étant compatibles avec au moins un protocole standard ;
- au moins un module (18) passerelle de réseau, communiquant avec ledit Network Browser (15) et reliant ledit Network Browser (15) à au moins un ensemble (130) d'éléments dudit coeur de réseau de télécommunications mobiles;
- au moins un module (14) passerelle d'intégration, communiquant avec ledit Network Browser (15) et reliant ledit Network Browser (15) à travers au moins un réseau de type IP (120) avec au moins un module (11) de services d'opérateurs de télécommunications ou de tierces parties et/ou à au moins un module (12) de services mobiles à valeur ajoutée;
- au moins un module (19) base de données et de profilage, communiquant avec ledit Network Browser (15), et comprenant au moins une fonctionnalité de définition d'au moins un profil de logique de services, la logique de services étant les règles de combinaisons et d'enchaînements de services; et
- au moins un module (13) d'administration, communiquant avec ledit Network Browser (15), avec ledit module (18) passerelle de réseaux, avec ledit module (14) passerelle d'intégration et avec ledit module (19) base de données et de profilage, et contrôlant ledit CENTRE RESEAU MULTISERVICES (10) et configurant lesdits modules base de données et de profilage (19), passerelle de réseau (18) et passerelle d'intégrations (14), le module (13) d'administration comprenant aussi une logique de regroupement et d'orchestration de services et un environnement de création de services ;
ledit CENTRE RESEAU MULTISERVICES (10) étant:
- un système connecté à au moins une plateforme de services (134) de type SMSC, passerelle WAP, passerelle OTA, module IVR et/ou un module de type GPRS ;
- un système de tarification et de facturation de services en temps réel, comprenant au moins un module (26) de tarification, et/ou au moins un module (25) de facturation, et/ou au moins un module (27) d'observation et de classement, lesdits modules étant reliés au Network Browser (15);
- un système où le Network Browser (15) déclenche multiples actions par type d'appel, lesdits déclenchements étant définis dans la base de données et de profilage (19) et utilisés par le Network Browser (15) pour exécuter et pour contrôler les différents services relatifs à un type d'appel ;
- un système de type Proxy effectuant une signalisation pour une partie ou un ensemble de messages du réseau de télécommunications mobiles, le procédé comprenant au moins :
- une étape de création d'au moins un service dans un environnement de création de services d'un module d'administration (13) compris dans ledit CENTRE RESEAU MULTISERVICES (10);
- une étape de création d'au moins une logique de services dans ledit module d'administration (13) en faisant les règles de combinaisons et d'enchaînements de services;
- une étape d'intégration et d'interprétation d'au moins un service et/ou d'au moins une logique de services dans ledit Network Browser (15), compris dans ledit CENTRE RESEAU MULTISERVICES (10) et communiquant avec ledit module d'administration (13) en:
interprétant et exécutant lesdits services dans un module (17) serveur de contrôle et d'orchestration d'appels, dit module CCB (17) compris dans ledit Network Browser (15), ledit module CCB (17) étant basé sur au moins un protocole de télécommunications et sur au moins un interpréteur de langage structuré par objets de type CCXML, ledit interpréteur de langage de type CCXML étant étendu à l'aide de protocoles de télécommunications;
interprétant et exécutant lesdits services dans un module (16) serveur de logique d'orchestration et d'intégration de services, dit module LIB (16), compris dans ledit Network Browser (15), ledit module LIB (16) étant basé sur au moins un protocole de télécommunications et sur au moins un interpréteur de langage structuré par objets de type VXML, ledit interpréteur de langage de type VXML étant étendu à l'aide de protocoles de télécommunications;
échangeant d'objets d'information et/ou d'instruction et/ou de protocoles entre ledit module CCB (17) et ledit module LIB (16);
- Une étape d'interprétation par ledit Network Browser (15) d'au moins un protocole de télécommunications compris dans une passerelle d'intégration (14) et d'au moins un protocole de télécommunications compris dans une passerelle de réseaux (18), lesdites passerelle d'intégration (14) et passerelle de réseaux (18) communiquant avec ledit Network Browser (15) et étant comprises dans ledit CENTRE RESEAU MULTISERVICES (10);
- Une étape de communication entre ledit Network Browser (15) et ladite passerelle de réseaux (18) à l'aide de protocoles contenant des représentations objets de protocoles standards de coeur de réseau de télécommunications mobiles de type SS7, MAP, CAP ou INAP et de traitement des desdits objets dans ledit Network Browser (15);
- Une étape de communication entre ladite passerelle de réseaux (18) et ledit ensemble d'éléments (130) de coeur de réseau de télécommunications mobiles par au moins un protocole coeur de réseau;
- une étape de déploiement et d'activation desdits services dans le Network Browser (15);
- une étape d'exécution par ledit CENTRE RESEAU MULTISERVICES (10) desdits services en effectuant l'approvisionnement, la consultation, l'interaction et/ou la modification des informations gérées dans un ensemble d'éléments (130) de coeur de réseau et en effectuant un transfert d'informations supplémentaires à travers les différents éléments (130) dudit coeur de réseau.

18. Procédé selon la revendication 17, **caractérisé en ce qu'**il comprend au moins une étape de gestion de sessions multiservices.

19. Procédé selon l'une des revendications 17 et 18, **caractérisé en ce qu'**il comprend au moins une étape d'activation d'au moins un nouveau service, pendant l'exécution d'au moins un service déjà actif.

20. Procédé selon l'une des revendications 17 à 19, **caractérisé en ce qu'**il est effectué en mode de fonctionnement de type événementiel.

21. Procédé selon l'une des revendications 17 à 20, **caractérisé en ce qu'**il est effectué en mode de fonctionnement de type client-serveur.

22. Procédé selon l'une des revendications 17 à 21, **caractérisé en ce qu'**il est effectué en mode de fonctionnement de type point à point.

23. Procédé selon l'une quelconque des revendications 17 à 22, **caractérisé en ce qu'**il comporte une étape supplémentaire de tarification et/ou de changement de la tarification en temps réel ou différé.

24. Procédé selon l'une des revendications 17 à 23, **caractérisé en ce qu'**il comporte une étape supplémentaire de facturation en temps réel ou différé.

25. Procédé selon l'une quelconque des revendications 17 à 24, **caractérisé en ce qu'**il comporte une étape de gestion temps réel ou différé des modes de tarifications et de facturations pour tout type d'utilisateur en mode abonné, en mode prépayé, en mode convergent, en mode bouquet de services, en mode tierce partie, d'au moins un réseau de télécommunication.

26. Procédé selon l'une quelconque des revendications 17 à 25, **caractérisé en ce qu'**il comporte une étape supplémentaire d'observation et de classement de l'usage et du comportement des utilisateurs en temps réel ou différé.

27. Procédé selon l'une quelconque des revendications 17 à 26, **caractérisé en ce que** la tarification, la facturation et le classement sont effectués par le CENTRE RESEAU MULTISERVICES (10) et/ou par des plateformes externes spécialisées.

28. Procédé selon l'une quelconque des revendications 17 à 27, **caractérisé en ce qu'**il comprend au moins une étape de modifications statiques ou/et dynamiques des paramètres commutés.

29. Procédé selon l'une quelconque des revendications 17 à 28, **caractérisé en ce qu'**il comprend au moins une étape de regroupement de messages de protocoles réseaux en un seul message destiné à au moins un élément particulier du réseau.

30. Procédé selon l'une quelconque des revendications 17 à 29, **caractérisé en ce qu'**il comprend une étape de signalisation de type Proxy, dans laquelle la passerelle de réseau (18) agit en tant que Proxy pour une partie ou pour l'ensemble des messages du réseau de télécommunications.

31. Procédé selon l'une quelconque des revendications 17 à 30, **caractérisé en ce qu'**il comprend une étape de signalisation collaborative de type triangulaire.

32. Procédé selon l'une quelconque des revendications 17 à 31, **caractérisé en ce qu'**il comprend au moins une étape de conversion entre deux quelconques ou plusieurs quelconques protocoles différents.

33. Procédé selon l'une quelconque des revendications 17 à 32, **caractérisé en ce qu'**il comprend au moins une étape de modification des paramètres d'au moins un message.

34. Procédé selon l'une quelconque des revendications 17 à 33, **caractérisé en ce qu'**il comprend au moins une étape de combinaison d'au moins un service avec au moins un profil et de support des paramètres de gestion d'états et du temps.

35. Procédé selon l'une quelconque des revendications 17 à 34, **caractérisé en ce qu'**il est effectué en temps réel ou en temps différé.

## Patentansprüche

1. Digitales Telekommunikationssystem für die Erstellung, Integration, Verwaltung, Bereitstellung, Aktivierung, Gruppierung und Orchestrierung von Services für verschiedene Serviceplattformen mit unterschiedlichen Orchestrierungslogiken oder von Services, die verschiedenartig miteinander kombiniert werden können, wobei das System, besagte MEHRFACHDIENSTNETZZENTRALE (10), als Anwendungs- und Servicesystem (10) in mindestens einem Mobilfunkkernnetz fungiert. Besagte MEHRFACHDIENSTNETZZENTRALE (10) besteht aus:
- mindestens einem Modul (15) Anwendungs- und Serviceorchestrierungsserver (15), besagtem Netzwerkbrowser (15), bestehend aus mindestens einem Modul (17) Verbindungskontroll- und Orchestrierungsserver, besagtem CCB-Modul (17) und mindestens einem Modul (16) Logikorchestrierungs- und Serviceintegrationsserver und besagtem LIB-Modul (16). Die genannten Services sind:
∘ Mobilfunknetzservices, feste, IP-, konvergente, Neuerstellungs- und/oder Funk-Kernnetzservices;
∘ mit mindestens einem Standardprotokoll kompatibel.
- mindestens einem Modul (18) Netzwerk-Gateway, das mit besagtem Netzwerkbrowser kommuniziert (15) und besagten Netzwerkbrowser (15) mit mindestens einer Einheit von Elementen (130) des besagten Mobilfunkkernnetzes verbindet;
- mindestens einem Modul (14) Integrations-Gateway, das mit besagtem Netzwerkbrowser kommuniziert (15) und besagten Netzwerkbrowser (15) über mindestens ein IP-Netzwerk (120) mit mindestens einem Modul (11) der Services des Telekommunikationsbetreibers oder Dritter und/oder mit mindestens einem Modul (12) mobiler Mehrwertservices verbindet;
- mindestens einem Modul (19) Datenbank und Profiling,_das mit besagtem Netzwerkbrowser (15) kommuniziert und mindestens eine Funktion zur Definition von mindestens einem Servicelogikprofil beinhaltet, womit die Regeln für Kombinationen und Sequenzen von Services bezeichnet werden; und
- mindestens einem Administrationsmodul (13), das mit besagtem Netzwerkbrowser (15), mit besagtem Modul (18) Netzwerk-Gateway, mit besagtem Modul (14) Integrations-Gateway und mit besagtem Modul (19) Datenbank und Profiling kommuniziert und aus Kontrollfunktionalitäten der besagten MEHRFACHDIENSTNETZZENTRALE (10) sowie Konfigurationsfunktionalitäten der besagten Module Datenbank und Profiling (19), Netzwerk-Gateway (18) und Integrations-Gateway (14) besteht; das Administrationsmodul (13) besteht zudem aus einer Logik zur Gruppierung und Orchestrierung von Services sowie einer Umgebung zur Erstellung von Services;
Besagte MEHRFACHDIENSTNETZZENTRALE (10) ist:
- ein System, das mit mindestens einer Serviceplattform (134) wie SMSC, WAP-Gateway, OTA-Gateway, IVR-Modul und/oder GPRS-Modul verknüpft ist;
- ein in Echtzeit funktionierendes Gebührenerhebungs- und Abrechnungssystem, das aus mindestens einem Gebührenerhebungsmodul (26) und/oder mindestens einem Abrechnungsmodul (25) und/oder mindestens einem Überwachungs- und Einstufungsmodul (27) besteht, die alle mit dem Netzwerkbrowser (15) verknüpft sind;
- ein System, in dem der Netzwerkbrowser (15) Funktionen beinhaltet, die pro Anrufart aus mehreren ausgelösten Aktionen bestehen, wobei diese Auslösung im Datenbank- und Profiling-Modul (19) definiert und vom Netzwerkbrowser (15) verwendet wird, um verschiedene mit einem Anruftyp verbundene Services auszuführen und zu kontrollieren;
- ein Proxy-System, das die Signalgebung für einen Teil oder eine Teilmenge der Nachrichten des Mobilfunknetzes durchführt.

2. Ein System entsprechend Forderung 1, in dem die besagten Module CCB (17) und LIB (16) auf mindestens einem Kommunikationsprotokoll und mindestens einem Interpreter objektorientierter Sprachen, der mit objektorientierten Deskriptoren strukturiert ist, basieren.

3. Ein System entsprechend Forderungen 1 und 2, in dem besagtes CCB-Modul (17) auf mindestens einem Interpreter für CCXML basiert.

4. Ein System entsprechend der vorgenannten Forderung, das den besagten Interpreter für CCXML um zusätzliche Kommunikationsprotokolle wie SCCP, TCAP, MAP, INAP, CAMEL, DIAMETER, H.323, MGCP, CORBA oder sonstige Telekommunikations- oder Informationsverarbeitungsprotokolle erweitert.

5. Ein System entsprechend Forderung 1 bis 4, in dem besagtes LIB-Modul (16) auf mindestens einem VXML-Interpreter basiert.

6. Ein System entsprechend der vorgenannten Forderung, das besagten VXML-Interpreter um zusätzliche Kommunikationsprotokolle erweitert, die nicht nur mit traditionellen Sprachanrufen verbunden sind.

7. Ein System entsprechend der Forderungen 1 bis 6, welches das besagte LIB-Modul (16) und das besagte CCB-Modul (17) zu einem einzelnen Modul verbindet.

8. Ein System entsprechend aller zuvor genannten Forderungen, in dem mindestens ein Administrationsmodul (13) oder mindestens ein Integrations-Gateway-Modul (14) oder mindestens ein LIB-Modul (16) oder mindestens ein CCB-Modul (17) oder mindestens ein Netzwerk-Gateway-Modul (18) oder mindestens ein Netzwerkbrowser-Modul (15) oder mindestens ein Datenbank- und Profiling-Modul (19) autark ist.

9. Ein System entsprechend der vorgenannten Forderung, dessen Umgebung zur Erstellung von Services lokal, per Fernzugriff oder von einem Terminal durch Betreiber und/oder Dritte und/oder Anschlussinhaber selbst genutzt werden kann.

10. Ein System entsprechend aller zuvor genannten Forderungen, in dem besagte Services interaktiv oder nicht interaktiv und für die gesamte End-to-End-Leistungskette mehrsprachig sind.

11. Ein System entsprechend aller zuvor genannten Forderungen, in dem die Gruppierung und Orchestrierung der Servicelogik für die gesamte End-to-End-Leistungskette unabhängig von den Sprachen der Services ist.

12. Ein System entsprechend aller zuvor genannten Forderungen, in dem besagtes Datenbank- und Profiling-Modul (19) mindestens eine Funktion zur Definition mindestens eines Benutzerprofils und mindestens eine Funktion zur Definition mindestens eines Serviceprofils enthält.

13. Ein System entsprechend aller zuvor genannten Forderungen, das Funktionen für folgende Zwecke beinhaltet:
- Anruf- und Servicekontrolle;
- Orchestrierung von Anrufen und Services;
- Mehrfache und unbegrenzte Auslösung;
- Parallele Sitzungen für Anrufkontrolle und Services;
- Zustandsmaschinen für Anrufe und Services;
- Verwaltung verschiedener Ereignisquellen;
- Interpretationen und Ausführung von Services und Servicelogik;
- Verwendung mehrerer Timer;
- Serviceverwaltung lokal und/oder per Fernzugriff und/oder eingeleitet durch Dritte;
- Profiling von Benutzern und Services;
- Einführung und/oder Verwaltung von Services mit komplexen Kontrollen in besagtem Kernnetz und in mindestens einem Element (130) des besagten Kernnetzes;
- Öffnung des besagten Kernnetzes und mindestens eines Elements des besagten Kernnetzes für mindestens einen eigenen, Betreiber-, Drittanbieter-, Internet- oder sonstigen Service;
- Öffnung des besagten Kernnetzes und mindestens eines Elements des besagten Kernnetzes für mindestens ein weiteres digitales Netzwerk.

14. Ein System entsprechend aller zuvor genannten Forderungen, das zum Hosting von Drittanwendungen und - services dient.

15. Ein System entsprechend aller zuvor genannten Forderungen, das dazu in der Lage ist, mindestens ein Mobilfunkkernnetz zu ersetzen.

16. Ein System entsprechend aller zuvor genannten Forderungen, das zur Verbreitung von Übertragungen dient.

17. Eine Verarbeitungsmethode für die Erstellung, Integration, Verwaltung, Bereitstellung, Aktivierung, Gruppierung und Orchestrierung von Services für verschiedene Serviceplattformen mit unterschiedlichen Orchestrierungslogiken sowie von Services, die verschiedenartig miteinander kombiniert werden können, implementiert in einem Anwendungs- und Servicesystem, wobei das System, besagte MEHRFACHDIENSTNETZZENTRALE (10), sich in mindestens einem Mobilfunkkernnetz befindet; besagte MEHRFACHDIENSTNETZZENTRALE (10) besteht aus:
- mindestens einem Modul (15) Anwendungs- und Serviceorchestrierungsserver (15), besagtem Netzwerkbrowser (15), bestehend aus mindestens einem Modul (17) Verbindungskontroll- und Orchestrierungsserver, besagtem CCB-Modul (17) und mindestens einem Modul (16) Logikorchestrierungs- und Serviceintegrationsserver und besagtem LIB-Modul (16). Die genannten Services sind:
∘ Mobilfunknetzservices, feste, IP-, konvergente, Neuerstellungs- und/oder Funk-Kernnetzservices;
∘ mit mindestens einem Standardprotokoll kompatibel.
- mindestens einem Modul (18) Netzwerk-Gateway, das mit besagtem Netzwerkbrowser kommuniziert (15) und besagten Netzwerkbrowser (15) mit mindestens einer Einheit von Elementen (130) des besagten Mobilfunkkernnetzes verbindet;
- mindestens einem Modul (14) Integrations-Gateway, das mit besagtem Netzwerkbrowser kommuniziert (15) und besagten Netzwerkbrowser (15) über mindestens ein IP-Netzwerk (120) mit mindestens einem Modul (11) der Services des Telekommunikationsbetreibers oder Dritter und/oder mit mindestens einem Modul (12) mobiler Mehrwertservices verbindet;
- mindestens einem Modul (19) Datenbank und Profiling, das mit besagtem Netzwerkbrowser (15) kommuniziert und mindestens eine Funktion zur Definition von mindestens einem Servicelogikprofil beinhaltet, womit die Regeln für Kombinationen und Sequenzen von Services bezeichnet werden; und
- mindestens einem Administrationsmodul (13), das mit besagtem Netzwerkbrowser (15), mit besagtem Modul (18) Netzwerk-Gateway, mit besagtem Modul (14) Integrations-Gateway und mit besagtem Modul (19) Datenbank und Profiling kommuniziert und aus Kontrollfunktionalitäten der besagten MEHRFACHDIENSTNETZZENTRALE (10) sowie Konfigurationsfunktionalitäten der besagten Module Datenbank und Profiling (19), Netzwerk-Gateway (18) und Integrations-Gateway (14) besteht; das Administrationsmodul (13) besteht zudem aus einer Logik zur Gruppierung und Orchestrierung von Services sowie einer Umgebung zur Erstellung von Services;
Besagte MEHRFACHDIENSTNETZZENTRALE (10) ist:
- ein System, das mit mindestens einer Serviceplattform (134) wie SMSC, WAP-Gateway, OTA-Gateway, IVR-Modul und/oder GPRS-Modul verknüpft ist;
- ein in Echtzeit funktionierendes Gebührenerhebungs- und Abrechnungssystem, das aus mindestens einem Gebührenerhebungsmodul (26) und/oder mindestens einem Abrechnungsmodul (25) und/oder mindestens einem Überwachungs- und Einstufungsmodul (27) besteht, die alle mit dem Netzwerkbrowser (15) verknüpft sind;
- ein System, in dem der Netzwerkbrowser (15) mehrere Aktionen pro Anruftyp auslöst, wobei die Auslöser im Datenbank- und Profiling-Modul (19) definiert und vom Netzwerkbrowser (15) verwendet werden, um verschiedene mit einem Anruftyp verbundene Services zu kontrollieren;
- ein Proxy-System, das die Signalgebung für einen Teil oder eine Teilmenge der Nachrichten des Mobilfunknetzes durchführt;
Die Methode besteht mindestens aus:
- einem Schritt zur Erstellung mindestens eines Services in einer Serviceerstellungsumgebung eines Administrationsmoduls (13), das in der besagten MEHRFACHDIENSTNETZZENTRALE (10) enthalten ist;
- einem Schritt zur Erstellung mindestens einer Servicelogik im besagten Administrationsmodul (13) durch die Erstellung von Regeln aus Kombinationen und Sequenzen von Services;
- einem Schritt zur Integration und Interpretation mindestens eines Services und/oder mindestens einer Servicelogik in besagtem Netzwerkbrowser (15), der in der besagten MEHRFACHDIENSTNETZZENTRALE (10) enthalten ist und mit besagtem Administrationsmodul (13) kommuniziert indem es:
besagte Services in einem
Modul (17) Anrufkontroll- und Orchestrierungsserver interpretiert und ausführt; besagtes CCB-Modul (17) ist in besagtem Netzwerkbrowser (15) enthalten und basiert auf mindestens einem Telekommunikationsprotokoll und mindestens einem Interpreter einer objektorientierten CCXML-Sprache, der durch Kommunikationsprotokolle erweitert werden kann;
besagte Services in einem Modul (16) Logikorchestrierungs- und Serviceintegrationsserver interpretiert und ausführt; besagtes LIB-Modul (16) ist in besagtem Netzwerkbrowser (15) enthalten und basiert auf mindestens einem Telekommunikationsprotokoll und mindestens einem Interpreter einer objektorientierten VXML-Sprache, der durch Kommunikationsprotokolle erweitert werden kann;
Informationsobjekte und/oder Anweisungen und/oder Protokolle zwischen besagtem CCB-Modul (17) und besagtem LIB-Modul (16) austauscht;
- einem Schritt zur Interpretation mindestens eines in einem Integrations-Gateway (14) enthaltenen Telekommunikationsprotokolls und mindestens eines in einem Netzwerk-Gateway (18) enthaltenen Telekommunikationsprotokolls durch besagten Netzwerkbrowser (15), der in der besagten MEHRFACHDIENSTNETZZENTRALE (10) enthalten ist, wobei besagter Integrations-Gateway (14) und besagter Netzwerk-Gateway (18) mit besagtem Netzwerkbrowser (15) kommunizieren;
- einem Schritt zur Kommunikation zwischen besagtem Netzwerkbrowser (15) und besagtem Netzwerk-Gateway (18) durch die Verwendung von Protokollen, die Objektrepräsentationen von Standardprotokollen für Mobilfunkkernnetze wie SS7, MAP, CAP oder INAP enthalten, sowie zur Verarbeitung besagter Objekte im besagten Netzwerkbrowser (15);
- einem Schritt zur Kommunikation zwischen besagtem Netzwerk-Gateway (18) und besagter Einheit von Elementen (130) des besagten Mobilfunkkernnetzes durch die Nutzung mindestens eines Kernnetz-Protokolls;
- einem Schritt zur Bereitstellung und Aktivierung besagter Services im Netzwerkbrowser (15);
- einem Schritt zur Durchführung der genannten Services durch besagte MEHRFACHDIENSTNETZZENTRALE (10) durch die Bereitstellung, Überprüfung, Interaktion mit und/oder die Modifikation von Informationen, die in einer Einheit von Elementen (130) des Kernnetzes verwaltet werden, sowie durch die Übertragung zusätzlicher Informationen durch die verschiedenen Elemente (130) des besagten Kernnetzes.

18. Eine Methode entsprechend Forderung 17, die aus mindestens einem Schritt zur Multi-Service-Sitzungsverwaltung besteht.

19. Eine Methode entsprechend einer der Forderungen 17 und 18, die aus mindestens einem Schritt zur Aktivierung mindestens eines neuen Services während der Ausführung eines bereits laufenden Services besteht.

20. Eine Methode entsprechend einer der Forderungen 17 bis 19, die im Ereignisbetrieb ausgeführt wird.

21. Eine Methode entsprechend einer der Forderungen 17 bis 20, die im Client-Server-Betrieb ausgeführt wird.

22. Eine Methode entsprechend einer der Forderungen 17 bis 21, die im Peer-to-Peer-Betrieb ausgeführt wird.

23. Eine Methode entsprechend einer der Forderungen 17 bis 22, die aus einem zusätzlichen Schritt zur in Echtzeit erfolgenden oder zeitverzögerten Gebührenerhebung und/oder Änderung der Gebührenerhebung besteht.

24. Eine Methode entsprechend einer der Forderungen 17 bis 23, die aus einem zusätzlichen Schritt zur in Echtzeit erfolgenden oder zeitverzögerten Abrechnung besteht.

25. Eine Methode entsprechend einer der Forderungen 17 bis 24, die einen Schritt zur Verwaltung der in Echtzeit erfolgenden oder zeitverzögerten Gebührenerhebung und Abrechnung für jede Art von Nutzer mindestens eines Telekommunikationsnetzes im Abonnement-, Prepaid-, Konvergenz-, Servicepaket- oder Drittanbietermodus beinhaltet.

26. Eine Methode entsprechend einer der Forderungen 17 bis 25, die aus einem zusätzlichen Schritt zur in Echtzeit erfolgenden oder zeitverzögerten Überwachung und Einstufung von Nutzung und Nutzerverhalten besteht.

27. Eine Methode entsprechend einer der Forderungen 17 bis 26, die die Gebührenerhebung, Abrechnung und Einstufung durch die MEHRFACHDIENSTNETZZENTRALE (10) und/oder spezialisierte externe Plattformen durchführt.

28. Eine Methode entsprechend einer der Forderungen 17 bis 27, die mindestens einen Schritt zur Durchführung statischer und/oder dynamischer Modifikationen durch Parameterwechsel beinhaltet.

29. Eine Methode entsprechend einer der Forderungen 17 bis 28, die mindestens einen Schritt zur Zusammenfassung von Netzwerkprotokollnachrichten zu einer einzigen Nachricht für mindestens ein konkretes Netzwerkelement beinhaltet.

30. Eine Methode entsprechend einer der Forderungen 17 bis 29, die einen Schritt zur Proxy-Signalisierung beinhaltet, bei dem der Netzwerk-Gateway (18) als Proxy für einige oder alle Nachrichten des Telekommunikationsnetzes fungiert.

31. Eine Methode entsprechend einer der Forderungen 17 bis 30, die einen Schritt zur kollaborativen Dreieckssignalisierung beinhaltet.

32. Eine Methode entsprechend einer der Forderungen 17 bis 31, die mindestens einen Schritt zur Konvertierung zwischen zwei oder mehr verschiedenen Protokollen beinhaltet.

33. Eine Methode entsprechend einer der Forderungen 17 bis 32, die mindestens einen Schritt zur Modifikation der Parameter mindestens einer Nachricht beinhaltet.

34. Eine Methode entsprechend einer der Forderungen 17 bis 33, die mindestens einen Schritt zur Verknüpfung mindestens eines Services mit mindestens einem Profil beinhaltet und Parameter für Zustands- und Zeitmanagement unterstützt.

35. Eine Methode entsprechend einer der Forderungen 17 bis 34, die die Ausführung in Echtzeit oder zeitverzögert ermöglicht.

## Claims

1. Digital telecommunications system for the creation, integration, management, deployment, activation, grouping and orchestration of services from various services platforms with different orchestration logics or of services according a variety of combinations between the services, the system being an applications and services system (10), said MULTISERVICES NETWORK CENTER (10), located within at least one mobile telecommunications core network, said MULTISERVICES NETWORK CENTER (10) comprising:
- At least one module (15) applications and services orchestration server, said Network Browser (15), comprising an least one module (17) calls control and orchestration server, said CCB module (17) and at least one module (16) logic orchestration and services integration server, said LIB module (16), said services:
∘ being mobile networks services, fixed, IP, convergent, new generations and/or telecommunications core network services ;
∘ being compliant with at least one standard protocol;
- at least one module (18) network gateway communicating with said Network Browser (15) and linking said Network Browser (15) to at least one set of elements (130) of said mobile telecommunications core network;
- at least one module (14) integration gateway, communicating with said Network Browser (15) et linking said Network Browser (15) through at least one IP network (120) with at least one module (11) of telecommunications operators services or of third parties and/or with at least one module (12) of mobile value added services;
- at least one module (19) database and profiling, communicating with said Network Browser (15), and comprising at least one functionality for definition of at least one services logic profile, the services logic being the rules of combinations and sequences of services; and
- at least one administration module (13), communicating with said Network Browser (15), with said module (18) network gateway, with said module (14) integration gateway and with said module (19) database and profiling, and comprising control functionalities of said MULTISERVICES NETWORK CENTER (10) and configuration functionalities of said modules database and profiling (19), network gateway (18) and integration gateway (14), the administration module (13) also comprising a logic of grouping and orchestration of services and a services creation environment;
said MULTISERVICES NETWORK CENTER (10) being:
- a system connected to at least one services platform (134) such as SMSC, WAP gateway, OTA gateway, IVR module and/or GPRS module;
- a charging and billing system in real time, comprising at least one charging module (26), and/or at least one billing module (25), and/or at least one observation and ranking module (27), said modules being linked to the Network Browser (15);
- a system wherein the Network Browser (15) comprises functions of multiple actions triggering per call type, said triggering being defined in the database and profiling module (19) and used by the Network Browser (15) to execute and to control different services related to a call type;
- a Proxy system performing signaling for a part or for a set of messages of the mobile telecommunications network.

2. System according to claim 1, **characterized in that** said modules CCB (17) and LIB (16) are based on at least one communication protocol and on at least one interpreter of languages structured by objects, related to descriptors structured by objects.

3. A system according to claims 1 and 2, **characterized in that** said CCB module (17) is based on at least one interpreter of CCXML language.

4. A system according to the foregoing claim, **characterized in that** said interpreter of CCXML language is extended with additional communications protocols such as SCCP, TCAP, MAP, INAP, CAMEL, DIAMETER, H.323, MGCP, CORBA or other telecommunications or information processing protocols.

5. A system according to any one of claims 1 to 4, **characterized in that** said LIB module (16) is based on at least one interpreter of VXML language.

6. A system according to the foregoing claim, **characterized in that** said interpreter of VXML language is extended with additional communications protocols, said additional communication protocols being not related only to traditional voice calls.

7. A system according to any one of claims 1 to 6, **characterized in that** said LIB module (16) and said CCB module (17) are combined into a single module.

8. A system according to any one of foregoing claims, **characterized in that** at least one administration module (13) or at least one integration gateway module (14) or at least one LIB module (16) or at least one CCB module (17) or at least one network gateway module (18) or at least one Network Browser module (15) or at least one database and profiling module (19) is self-sufficient.

9. A system according to the foregoing claim, **characterized in that** said services creation environment is accessible locally, remotely or from a terminal, by an operator and/or by third parties and/or by subscribers themselves.

10. A system according to any one of foregoing claims, **characterized in that** said services are interactive or not interactive and multilingual for the whole end-to-end chain.

11. A system according to any one of foregoing claims, **characterized in that** said grouping and orchestration services logic is independent of the languages of the services for the whole end-to-end chain.

12. A system according to any one of foregoing claims, **characterized in that** said database and profiling module (19) includes at least one function for defining at least one user profile and at least one function for defining at least one service profile.

13. A system according to any one of foregoing claims, **characterized in that** it comprises functionalities for:
- Calls control and services control;
- Orchestrations of calls and of services;
- Multiple and unlimited triggering;
- Parallel sessions of calls control and services;
- State machines for calls and services;
- Management of different event sources;
- Interpretations and execution of services and of services logic;
- Use of multiple timers;
- Management of services locally and/or remotely and/or when initiated by third-parties;
- Profiling of users and of services;
- Introductions and/or managements in said core network and in at least one element (130) of said core network, of services with complex control;
- Opening of said core network and of at least one element of said core network to at least one service, wherein said service is an owned service, an operator service, a third-party service, an Internet service, or any other service;
- Opening of said core network and of at least one element of said the core network to at least one other digital network.

14. A system according to any one of foregoing claims, **characterized in that** it is a system for hosting of third party applications and services.

15. A system according to any one of the foregoing claims, **characterized in that** it has the ability to substitute at least one mobile telecommunications core network.

16. A system according to any one of the foregoing claims, **characterized in that** it is a system for Broadcast diffusion.

17. A processing method for the creation, integration, management, deployment, activation, grouping and orchestration of services from various services platforms with different orchestration logics or of services according a variety of combinations between the services, implemented in an applications and services system (10), said MULTISERVICES NETWORK CENTER (10), located within at least one mobile telecommunications core network, said MULTISERVICES NETWORK CENTER (10) comprising:
- At least one module (15) applications and services orchestration server, said Network Browser (15), comprising an least one module (17) calls control and orchestration server, said CCB module (17) and at least one module (16) logic orchestration and services integration server, said LIB module (16), said services:
∘ being mobile networks services, fixed, IP, convergent, new generations and/or telecommunications core network services ;
∘ being compliant with at least one standard protocol;
- at least one module (18) network gateway communicating with said Network Browser (15) and linking said Network Browser (15) to at least one set of elements (130) of said mobile telecommunications core network;
- at least one module (14) integration gateway, communicating with said Network Browser (15) et linking said Network Browser (15) through at least one IP network (120) with at least one module (11) of telecommunications operators services or of third parties and/or with at least one module (12) of mobile value added services;
- at least one module (19) database and profiling, communicating with said Network Browser (15), and comprising at least one functionality for definition of at least one services logic profile, the services logic being the rules of combinations and sequences of services; and
- at least one administration module (13), communicating with said Network Browser (15), with said module (18) network gateway, with said module (14) integration gateway and with said module (19) database and profiling, and comprising control functionalities of said MULTISERVICES NETWORK CENTER (10) and configuration functionalities of said modules database and profiling (19), network gateway (18) and integration gateway (14), the administration module (13) also comprising a logic of grouping and orchestration of services and a services creation environment;
said MULTISERVICES NETWORK CENTER (10) being:
- a system connected to at least one services platform (134) such as SMSC, WAP gateway, OTA gateway, IVR module and/or GPRS module;
- a charging and billing system in real time, comprising at least one charging module (26), and/or at least one billing module (25), and/or at least one observation and ranking module (27), said modules being linked to the Network Browser (15);
- a system wherein the Network Browser (15) triggers multiple actions per call type, triggers being defined in the database and profiling module (19) and used by the Network Browser (15) to execute and to control different services related to a call type;
- a Proxy system performing signaling for a part or for a set of messages of the mobile telecommunications network;
the method comprising at least:
- a step of creating of at least one service in a service creation environment of an administration module (13) comprised in said MULTISERVICES NETWORK CENTER (10);
- a step of creating of at least one services logic in said administration module (13) by making rules of combinations and of sequences of services;
- a step of integration and of interpretation of at least one service and/or at least one services logic in said Network Browser (15), comprised in said MULTISERVICES NETWORK CENTER (10) and communicating with said administration module (13) by:
interpreting and executing said services in a module (17) calls control and orchestration server, said CCB module (17) comprised in said Network Browser (15), said CCB module (17) being based on at least one telecommunications protocol and on at least one interpreter of structured by objects CCXML language, said interpreter of CCXML language being extended with communications protocols;
interpreting and executing said services in a module (16) logic orchestration and services integration server, said LIB module (16) comprised in said Network Browser (15), said LIB module (16) being based on at least one telecommunications protocol and on at least one interpreter of structured by objects VXML language, said interpreter of VXML language being extended with communications protocols;
exchanging of information objects and/or instructions and/or protocols between said CCB module (17) and said LIB module (16);
- A step of interpretation by said Network Browser (15) of at least one telecommunications protocol comprised in an integration gateway (14) and of at least one telecommunications protocol comprised in a network gateway (18), said integration gateway (14) and network gateway (18) communicating with said Network Browser (15) and being comprised in said MULTISERVICES NETWORK CENTER (10);
- A step of communication between said Network Browser (15) and said network gateway (18) by using protocols comprising objects representations of standard protocols of mobile telecommunications core network such as SS7, MAP, CAP or INAP, and of processing of said objects in said Network Browser (15);
- A step of communication between said network gateway (18) and said set of elements (130) of mobile telecommunications core network, by using at least one core network protocol;
- A step of deployment and activation of said services in the Network Browser (15);
- A step of execution by said MULTISERVICES NETWORK CENTER (10) of said services by performing provisioning, consultation, interaction and/or modification of information managed in a set of elements (130) of core network and by performing a transfer of additional information through the different elements (130) of said core network.

18. A method according to claim 17, **characterized in that** it comprises at least one step of multi-services sessions management.

19. A method according to one of claim 17 and 18, **characterized in that** it comprises at least one step of activation of at least one new service, during the execution of at least one already running service.

20. A method according to one of claims 17 to 19, **characterized in that** it is performed in event operating mode.

21. A method according to one of claims 17 to 20, **characterized in that** it is performed in client-server operating mode.

22. A method according to one of claims 17 to 21, **characterized in that** it is performed in peer-to-peer operating mode.

23. A method according to any one of claims 17 to 22, **characterized in that** it comprises an additional step of charging and/or changing of the charging in real time or in deferred mode.

24. A method according to any one of claims 17 to 23, **characterized in that** it comprises an additional step of billing in real time or in deferred mode.

25. A method according to any one of claims 17 to 24, **characterized in that** it comprises a step of managing of charging and billing in real time or in deferred mode for any type of user of at least one telecommunications network, in subscription mode, in prepaid mode, in convergent mode, in bundle of services mode, in third-party mode.

26. A method according to any one of claims 17 to 25, **characterized in that** it comprises an additional step of observation and ranking of usage and user behavior in real time or in deferred mode.

27. A method according to any one of claims 17 to 26, **characterized in that** the charging, the billing and the ranking is performed by the MULTISERVICES NETWORK CENTER (10) and/or by specialized external platforms.

28. A method according to any one of claims 17 to 27, **characterized in that** it comprises at least one step of static or/and dynamic modifications of switching parameters.

29. A method according to any one of claims 17 to 28, **characterized in that** it comprises at least one step of grouping of network protocols messages into a single message intended for at least one particular network element.

30. A method according to any one of claims 17 to 29, **characterized in that** it comprises a step of Proxy signaling, where the network gateway (18) acts as a proxy for some or for all messages of the telecommunications network.

31. A method according to any one of claims 17 to 30, **characterized in that** it comprises a step of triangular collaborative signaling.

32. A method according to any one of claims 17 to 31, **characterized in that** it comprises at least one step of conversion between two or more different protocols.

33. A method according to any one of claims 17 to 32, **characterized in that** it comprises at least one step of modification of the parameters of at least one message.

34. A method according to any one of claims 17 to 33, **characterized in that** it comprises at least one step of combining at least one service with at least one profile and of supporting parameters of states and time management.

35. A method according to any one of claims 17 to 34, **characterized in that** it is performed in real time or in deferred mode.
